# FASCICULE DE BREVET EUROPEEN

(11) **EP 3 474 583 B1**
(45) Date de publication et mention de la délivrance du brevet: **21.07.2021**
(21) Numéro de dépôt: 18201306.0
(22) Date de dépôt: 18.10.2018
(51) Int. Cl.: H04W 8/20

(54) **PROCÉDÉS DE CHARGEMENT D'UN PROFIL DANS UN ÉLÉMENT SÉCURISÉ, GESTIONNAIRE ET ÉLÉMENT SÉCURISÉ PERSONNALISABLE**
LADEVERFAHREN EINES PROFILS IN EINEM GESICHERTEN ELEMENT, PROGRAMMMANAGER UND PERSONALISIERBARES GESICHERTES ELEMENT
METHODS OF LOADING A PROFILE IN A SECURE ELEMENT, MANAGER AND CUSTOMISABLE SECURE ELEMENT

(30) Priorité: 20.10.2017 FR 1759930
(43) Date de publication de la demande: 24.04.2019
(73) Titulaire: IDEMIA France, 92400 Courbevoie (FR)
(72) Inventeur: DUMOULIN, Jérôme, 92400 COURBEVOIE (FR); PARDIEU, Marc, 92400 COURBEVOIE (FR); FOUGEROUSE, Cyrille, 92400 COURBEVOIE (FR)
(74) Mandataire: Santarelli

(56) Documents cités:
- EP-A1- 1 503 602
- EP-A1- 3 288 300
- US-A1- 2016 286 335
- SIMALLIANCE: "LS on first drafts of Profile Package technical specification V2.0 and Test specification V1.0", ETSI DRAFT; SCPTEC(16)000050, EUROPEAN TELECOMMUNICATIONS STANDARDS INSTITUTE (ETSI), 650, ROUTE DES LUCIOLES ; F-06921 SOPHIA-ANTIPOLIS ; FRANCE , vol. - SCP TEC - SCP-TEC 18 mars 2016 (2016-03-18), pages 1-76, XP014269952, Extrait de l'Internet: URL:docbox.etsi.org\SCP\SCP-WG-T\05-CONTRI BUTIONS\2016\SCPTEC(16)000050_LS_on_first_ drafts_of_Profile_Package_technical_specif icatio.zip\Profile interoperability technical specification_V2.0 draft 8.pdf [extrait le 2016-03-18]

## Description

### DOMAINE DE L'INVENTION

L'invention est dans le domaine de la personnalisation à distance des éléments sécurisés. Elle concerne, en particulier, des procédés de gestion de modèles d'élément de profil, un support d'informations, un gestionnaire de modèles d'élément de profil et un élément sécurisé personnalisable.

### CONTEXTE DE L'INVENTION

Un élément sécurisé, par exemple une carte à puce, peut être utilisé dans divers équipements ou dispositifs hôtes (terminal mobile, *Smartphone,* tablette numérique, compteur électrique, véhicule, etc.).

En particulier, l'élément sécurisé peut être intégré de manière amovible dans le dispositif hôte ou embarqué (par exemple soudé) dans celui-ci.

Un premier type d'élément sécurisé est connu sous l'appellation de carte UICC (pour *Universal Integrated Circuit Card* en anglais) visée dans la norme ETSI TS 102 221 et regroupe les cartes à puce classiques amovibles, type carte SIM (ou USIM pour *Universal Subscriber Identity Module* en anglais), mais également des jetons (*token* en anglais) sécurisés, tous identifiables de manière unique.

Un second type d'élément sécurisé est connu sous l'appellation d'« eSE » (pour *embedded Secure Element*) et visé dans la spécification *GlobalPlatform Card Specification Version 2.2.1* relative aux standards GlobalPlatform. Ce second type vise les éléments sécurisés embarqués, c'est-à-dire non amovibles.

A titre d'exemple, l'élément sécurisé embarqué peut être une « eUICC » pour carte à circuit intégré universelle embarquée *(embedded Universal Integrated Circuit Card* en anglais), telle que visée dans la norme ETSI TS 103 383.

Dans la suite du document, par souci de simplification, nous utiliserons le terme générique de « carte ou élément sécurisé » pour désigner l'ensemble des différents éléments sécurisés cités ci-avant, généralement utilisés pour s'identifier (par exemple sur un réseau de téléphonie mobile).

Pour pallier le fait que l'utilisateur ne peut pas simplement changer l'élément sécurisé embarqué dans le dispositif hôte par un autre élément sécurisé ou ne souhaite tout simplement pas effectuer des manipulations d'échange d'un élément sécurisé dans le dispositif hôte, l'utilisateur n'est parfois pas en capacité de changer d'identifiant unique permettant de s'identifier.

Il est alors prévu que l'élément sécurisé puisse fonctionner selon plusieurs profils différents, chacun identifié par un identifiant unique, et stockés ou téléchargés sur l'élément sécurisé. Ainsi plusieurs profils différents peuvent être présents sur un même élément sécurisé, par exemple une même eUICC.

Techniquement, un profil, par exemple tel que défini dans le document *'*SGP.02 - Remote Provisioning Architecture for Embedded UICC Technical Spécification - Version 3.1 - 27 May 2016*',* est un environnement sécurisé pouvant comprendre une combinaison d'une structure de fichiers (notamment sous forme d'« *elementary files* » ou EF et/ou « Dedicated Files » ou DF), de données et d'applications permettant, lorsque le profil est activé, d'accéder à des services (e.g. voix, données) proposés par un opérateur de réseau spécifique, typiquement un opérateur de réseau mobile. Il faut noter qu'un seul profil peut être actif à la fois.

En principe, la gestion de ces profils peut être effectuée soit par un serveur distant *(« Machine to Machine* » ou M2M system), soit localement par une application installée sur l'eUICC, voire manuellement par l'utilisateur lui-même.

Ces profils peuvent être créés à distance au niveau d'une infrastructure de personnalisation. En pratique, cette infrastructure de personnalisation est contrôlée soit par l'opérateur lui-même, soit par un tiers (e.g. *Profil Creator* défini dans le document *'*eUICC Profile Package: Interoperable Format Technical Specification V2.0' SIMALLIANCE) pour le compte de l'opérateur et génère des packs ou ensembles de profil (PP pour *Profile Packages* en anglais), en fonction des souhaits de l'opérateur.

Un tel pack de profil, ci-après appelé simplement « profil », représente la structure de données du profil à installer et est envoyé à l'eUICC pour l'y charger et l'installer. Avantageusement, le même format de description est utilisé par le tiers, l'opérateur, et le fournisseur de l'eUICC, ce qui permet d'assurer une interopérabilité entre ces entités.

En pratique, un profil inclut un ensemble d'éléments de profil (PE pour *Profile Elements* en anglais) utilisant un langage de description indépendant du protocole de transport. Chaque élément de profil représente une ou plusieurs caractéristiques du profil et est décrit individuellement de sorte qu'il peut être traité par l'eUICC indépendamment des autres éléments de profil, en respectant, toutefois, quelques séquencements spécifiques.

De façon générale, un élément de profil peut inclure un fichier, une référence à une structure de fichiers système, un ensemble de paramètres d'une application d'accès réseau, une application interopérable, des droits d'accès, etc. Par exemple, un élément de profil peut être de l'un des types suivants : PE-Header ou PEH (signale le début d'un profil), PE-MF (*Master File* en anglais - Fichier répertoire où sont situés des fichiers principaux de profil), PE-CD (*Configuration Data* en anglais - Fichier répertoire où sont situés des fichiers de configuration), PE-TELECOM (Fichier répertoire où sont situés des fichiers élémentaires liés à des fonctionnalités telecom), PE-USIM (*Universal Subscriber Identity Module* en anglais - Fichier répertoire où sont situés des fichiers élémentaires liés à l'identification d'un abonné sur un réseau mobile), PE-ISIM (*IP multimedia Services Identity Module* en anglais - Fichier répertoire où sont situés des fichiers élémentaires liés à l'identification d'un abonné sur un réseau IP), PE-PINCodes (Fichier répertoire où sont situés des fichiers élémentaires liés à la gestion de codes PIN), PE-SecurityDomain (Fichier répertoire où sont situés des fichiers élémentaires liés à la création d'un domaine sécurisé), PE-Application (Fichier répertoire où sont situés des fichiers élémentaires liés au chargement d'une application), PE-End (signale la fin d'un profil), etc.

Un élément de profil de type PE-Header signalant le début d'un profil fournit diverses informations sur le contenu du profil, par exemple une liste de services devant être supportés par l'eUICC, dans laquelle chaque service est estampillé avec un indicateur spécifiant si le service est obligatoire ou optionnel. Tout élément de profil, en particulier lié à un tel service, peut inclure un tel indicateur.

Pour réduire la taille des données du profil à transmettre, il est prévu que les éléments de profil puissent faire référence à un ou plusieurs modèles (*templates* en anglais) et fournissent des informations complétant les modèles (parfois remplaçant des valeurs par défaut). Un modèle peut comprendre des informations/données se rapportant à tout ou partie d'un élément de profil, voire à plusieurs éléments de profil. La création d'un profil est généralement mise en œuvre en utilisant ces modèles.

Les profils devant être conforme aux spécifications des standards ETSI (e.g. *ETSI TS 102 221 V13.1.0 (2016-05)),* cette contrainte a conduit l'organisation SIMALLIANCE à définir plusieurs modèles, dans lesquels le système de fichiers peut prendre des valeurs par défaut (identifiant de fichiers, droits d'accès, ...) définies par les standards auxquels il se réfère. Ces *templates* définissent donc un formatage des données en fixant des valeurs par défaut pour certains paramètres, de sorte que leur utilisation permet de faciliter et d'accélérer, de par la réduction des données à transmettre, la création du profil par l'infrastructure de personnalisation susmentionnée, ainsi que son installation sur l'eUICC.

Pour ce faire, les *templates* sont au préalable (par exemple, durant une phase de pré-personnalisation ou personnalisation de l'élément sécurisé) chargés en mémoire de l'eUICC. Un *template,* lorsqu'il est chargé avec des valeurs données permettant de le « personnaliser », permet de décrire un élément de profil personnalisé. En pratique, chaque *template* est associé à un numéro d'identification unique appelé OID (pour *Object IDentifier* en anglais) pour être identifié de façon unique.

Conformément à l'architecture proposée par la GSMA pour le chargement de profils dans des éléments sécurisés à distance via OTA (pour *Over the Air* en anglais), les éléments de profil, incluant une référence (l'OID) aux *templates* éventuellement utilisés, sont envoyés par un serveur de transport SM-SR (pour *Subscription Management-Secure Routing* en anglais) au domaine de sécurité principal ou racine ISD-R (pour *Issuer Security Domain Root* en anglais) de l'eUICC. Dans une configuration et architecture spécifique, proposée par la GSMA (connu sous la dénomination « *consumer mode* » en anglais), l'envoi peut aussi être fait directement via un serveur de transport SM-DP+ au domaine de sécurité de profil ISD-R.

A réception d'un nouvel élément de profil à charger et à installer qui comprend une ou plusieurs références (OID) à des *templates,* il suffit à l'eUICC de charger le ou les *templates* ainsi référencés, en mémoire de l'eUICC et de fusionner (*Merge* en anglais) les valeurs de chaque *template* chargé en mémoire avec les valeurs reçues dans l'élément de profil qui en fait référence, pour construire un élément de profil complet pour l'eUICC. Par fusionner, il faut entendre le fait d'utiliser prioritairement les données de l'élément de profil reçu et de les compléter en utilisant les données du ou des *templates* référencés et présents en mémoire lorsque des données ne sont pas présentes dans l'élément de profil reçu.

En pratique, l'eUICC charge et installe successivement chaque élément de profil constituant un profil à charger.

Les *templates* définissent un certain nombre d'informations (par exemple des fichiers ou *elementary files*) constituant les éléments de profil, qui peuvent évoluer dans le temps (par exemple leur taille, leurs valeurs, etc.), en fonction, par exemple, de l'évolution de standards spécifiques.

Il peut donc arriver qu'un élément de profil soit conçu par référence à un tel *template* qui a évolué et qu'il soit fusionné, par l'eUICC, avec un *template* qui ne tient pas compte de cette évolution. Le résultat de la fusion peut alors présenter un format inattendu. Dans ce cas, un message d'erreur peut-être retourné. Même si le format obtenu est conforme à celui attendu, il peut cependant arriver que le chargement du profil ou bien encore l'exécution du profil ou d'une fonctionnalité liée à l'élément de profil issu de la fusion dysfonctionne et génère également un message d'erreur.

En fait, dans ce cas illustratif, sous le même identifiant OID de *template,* l'infrastructure de personnalisation ou l'opérateur s'appuie sur un *template* mis à jour pour décrire l'élément de profil, alors que l'eUICC s'appuie sur un *template* différent (avec le même OID mais non mis à jour) pour recréer (par fusion) l'élément de profil final. La situation inverse peut aussi s'appliquer, avec une eUICC s'appuyant sur un *template* mis à jour et l'infrastructure de personnalisation ou l'opérateur s'appuyant sur un *template* (même OID) non mis à jour pour décrire l'élément de profil.

Cette situation n'est pas satisfaisante.

Il existe donc un besoin général d'améliorer la gestion des *templates* utilisés lors du chargement (i.e. création, installation ou mise à jour) de profils sur un élément sécurisé.

### RESUME DE L'INVENTION

La présente invention a ainsi pour objet de pallier au moins un de ces inconvénients. L'invention concerne des procédés, un support d'informations, un gestionnaire et un élément sécurisé comme définis dans les revendications indépendantes 1, 6, 11, 12 et 14. Des modes de réalisation sont définis dans les revendications dépendantes.

Dans ce contexte, un aspect concerne tout d'abord un procédé de chargement d'un profil en mémoire d'un élément sécurisé, comportant, au niveau d'un serveur distant de l'élément sécurisé, les étapes suivantes :
obtenir une information représentative d'une version d'un modèle d'élément de profil stocké en mémoire de l'élément sécurisé,
déterminer une différence de version entre la version obtenue et une version d'un même modèle (notamment portant le même identifiant OID) stocké dans une mémoire accessible par le serveur distant,
en cas de détermination d'une différence, mettre à jour au moins l'un parmi le modèle stocké en mémoire de l'élément sécurisé et le modèle accessible par le serveur distant, pour aligner leurs versions,
générer un profil incluant un élément de profil faisant référence audit modèle accessible par le serveur distant, dans sa version alignée, et
postérieurement à l'étape de mise à jour, envoyer, à l'élément sécurisé, le profil généré.

Corrélativement, un aspect concerne un gestionnaire de profil pour la personnalisation d'un élément sécurisé par chargement de profil, le gestionnaire comprenant au moins un microprocesseur configuré pour :
obtenir une information représentative d'une version d'un modèle d'élément de profil stocké en mémoire de l'élément sécurisé,
déterminer une différence de version entre la version obtenue et une version d'un même modèle stocké dans une mémoire accessible par le gestionnaire,
en cas de détermination d'une différence, mettre à jour au moins l'un parmi le modèle stocké en mémoire de l'élément sécurisé et le modèle accessible par le gestionnaire, pour aligner leurs versions,
générer un profil incluant un élément de profil faisant référence audit modèle accessible par le gestionnaire, dans sa version alignée, et
postérieurement à l'étape de mise à jour, envoyer, à l'élément sécurisé, le profil généré.

Ces dispositions permettent d'aligner, à faible coût, les versions de modèles d'élément de profil entre le gestionnaire (ou serveur distant) et l'élément sécurisé, afin qu'un profil élaboré sur ces versions de modèles et chargé ultérieurement dans l'élément sécurisé ne dysfonctionne pas.

Des caractéristiques optionnelles de modes de réalisation de l'invention sont définies dans les revendications, principalement en termes de procédé. Bien entendu, ces caractéristiques peuvent être transposées en caractéristiques structurelles du gestionnaire.

Dans un mode de réalisation, le procédé comprend en outre une étape d'envoi d'une requête comprenant une commande pour obtenir, en réponse, ladite information. Cela permet au gestionnaire d'initier l'obtention des informations relatives aux modèles stockés sur les éléments sécurisés, et ainsi de contrôler le flux de réponses depuis ceux-ci.

Selon un mode de réalisation particulier, l'envoi de la requête est déclenché par la réalisation d'un événement déclencheur parmi l'écoulement d'une durée prédéfinie au niveau du serveur distant, une demande de chargement d'un profil dans l'élément sécurisé reçue d'un tierce partie, la mise à jour et la péremption d'un modèle stocké dans la mémoire accessible par le serveur distant. Ainsi, le gestionnaire peut solliciter les éléments sécurisés à des moments clés, susceptibles d'impacter les futurs profils à charger.

Selon un autre mode de réalisation particulier, la requête comprend une commande de type case 4 selon la description faite dans le standard ISO7816-4, dernière version en août 2014 (par exemple une commande GET DATA du standard GlobalPlatform). Par simplification, dans la suite du document, nous ferons référence principalement à une commande basée sur la commande GET DATA du standard globalPlatform Cette disposition permet de ne pas modifier les interfaces de communication entre le gestionnaire et les éléments sécurisés.

Dans un autre mode de réalisation, l'étape d'obtention de ladite information est en réponse à une étape préalable de mise à jour (par exemple, mise à jour du système d'exploitation), par le serveur distant, de l'élément sécurisé. Cette disposition limite les échanges entre le gestionnaire et l'élément sécurisé pour suivre l'état des modèles que ce dernier détient.

Selon un mode de réalisation particulier, l'étape préalable de mise à jour comprend la mise à jour d'un système d'exploitation de l'élément sécurisé. Il s'agit en effet d'une mise à jour importante de l'élément sécurisé, qui impacte le plus souvent nombre de fichiers, dont potentiellement les modèles d'élément de profil stockés par l'élément sécurisé.

Selon un autre mode de réalisation particulier, l'étape d'obtention de ladite information est en réponse à un événement déclencheur post mise à jour préalable, parmi une première connexion ou authentification réseau de l'élément sécurisé et un événement d'utilisation d'une commande ou procédure définie par une interface de l'élément sécurisé, permettant, par exemple, une interaction entre l'élément sécurisé et le terminal, dit toolkit. Cette disposition permet de limiter les risques de pic de charge au niveau du gestionnaire pour traiter les réponses d'une flotte d'éléments sécurisés. En effet, il est classique qu'un gestionnaire déclenche une mise à jour collective de la flotte d'éléments sécurisés. Grâce à l'événement déclencheur, les réponses des éléments sécurisés ne sont pas envoyées simultanément, mais décalées (de façon non homogènes dans la flotte) à la réalisation dudit événement déclencheur.

Au regard de ces modes de réalisation, le microprocesseur du gestionnaire est alors également configuré pour envoyer une requête comprenant une commande pour obtenir, en réponse, ladite information ou envoyer une commande de mise à jour d'un système d'exploitation de l'élément sécurisé pour obtenir, en réponse, ladite information.

Dans un autre mode de réalisation, l'information représentative d'une version du modèle d'élément de profil comprend l'un ou plusieurs parmi : un numéro de version dudit modèle, une date d'expiration dudit modèle et une valeur de hachage calculée à partir dudit modèle. Ces informations peuvent aisément être intégrées à des champs de métadonnées des modèles, et prennent peu de place dans les réponses envoyées. Aussi, cette disposition permet de minimiser l'utilisation mémoire et bande passante.

Dans un autre mode de réalisation, ladite étape de détermination d'une différence comprend la détermination d'une différence entre la version obtenue du modèle stocké en mémoire de l'élément sécurisé et la version du modèle utilisé pour générer le profil à envoyer,
et l'étape de mise à jour en cas de différence comprend l'envoi d'une commande de mise à jour du modèle stocké en mémoire de l'élément sécurisé avec le modèle utilisé pour générer le profil à envoyer.

Cette disposition permet de mettre à jour l'élément sécurisé en fonction d'un profil déjà créé par le gestionnaire. On limite ainsi les traitements réalisés au niveau de ce dernier.

Selon un mode de réalisation particulier, la commande de mise à jour comprend une commande STORE DATA du standard GlobalPlatform. Ainsi, l'invention ne requiert pas de modification des interfaces de communication du gestionnaire et de l'élément sécurisé.

Dans un autre mode de réalisation, l'étape de mise à jour en cas de différence comprend, préalablement à l'étape de génération, la mise à jour du modèle accessible par le serveur distant pour correspondre à la version du modèle obtenue de l'élément sécurisé, de sorte que le profil à envoyer est généré à l'aide du modèle mis à jour.

La bonne version du modèle peut être obtenue par le gestionnaire auprès d'un serveur tiers/dédié ou bien en local dans une collection de *templates.* Pour ce faire, le gestionnaire peut par exemple s'appuyer sur une autre information contenue dans la réponse qui identifie un constructeur de l'élément sécurisé ou un serveur de celui-ci.

Cette disposition permet de limiter les échanges avec les éléments sécurisés, puisque à la fois le gestionnaire et le profil à charger sont adaptés (le premier est mis à jour, le deuxième est généré) à la configuration de l'élément sécurisé (en terme de version des modèles utilisés).

Côté élément sécurisé, un aspect vise également un procédé de chargement d'un profil en mémoire d'un élément sécurisé, comportant, au niveau de l'élément sécurisé, les étapes suivantes :
envoyer, à un serveur distant, une information représentative d'une version d'un modèle d'élément de profil stocké en mémoire de l'élément sécurisé,
en réponse à cet envoi, réception et exécution d'une commande de mise à jour du modèle d'élément de profil stocké en mémoire, envoyée par le serveur distant,
postérieurement à l'étape de mise à jour, réception d'un profil à charger envoyé par le serveur distant, le profil à charger incluant au moins un élément de profil faisant référence audit modèle stocké en mémoire, et
chargement et installation, en mémoire, du profil reçu par fusion avec le modèle stocké auquel il fait référence.

Corrélativement, un aspect vise aussi un élément sécurisé personnalisable (20) comprenant au moins un microprocesseur configuré pour :
envoyer, à un serveur distant (330), une information représentative d'une version d'un modèle d'élément de profil stocké en mémoire de l'élément sécurisé,
en réponse à cet envoi, réception et exécution d'une commande de mise à jour du modèle d'élément de profil stocké en mémoire, envoyée par le serveur distant,
postérieurement à l'étape de mise à jour, réception d'un profil à charger envoyé par le serveur distant, le profil à charger incluant au moins un élément de profil faisant référence audit modèle stocké en mémoire, et
chargement et installation, en mémoire, du profil reçu par fusion avec le modèle stocké auquel il fait référence.

La présente invention côté élément sécurisé présente les mêmes avantages que ceux décrits ci-dessus en lien avec le serveur distant. En outre, des caractéristiques optionnelles sont également prévues, par exemple telles que définies dans les revendications, principalement en termes de procédé.

Par exemple, dans un mode de réalisation, l'étape d'envoi de ladite information par l'élément sécurisé est en réponse à la réception d'une requête émise par le serveur distant, comprenant une commande pour obtenir, en réponse, ladite information. La requête peut comprendre une commande de type case 4 selon la description faite dans le standard ISO7816-4 (par exemple, une commande GET DATA du standard GlobalPlatform).

Dans un autre mode de réalisation, l'étape d'envoi de ladite information par l'élément sécurisé est en réponse à une étape préalable de mise à jour, par le serveur distant, du système d'exploitation de l'élément sécurisé.

Notamment, l'étape d'envoi de ladite information par l'élément sécurisé peut être en réponse à un événement déclencheur post mise à jour préalable, parmi une première connexion ou authentification réseau de l'élément sécurisé et un événement d'utilisation d'une commande ou procédure définie par une interface de l'élément sécurisé, permettant, par exemple, une interaction entre l'élément sécurisé et le terminal, dit toolkit.

Dans ces modes de réalisation, le microprocesseur de l'élément sécurisé est alors également configuré pour générer et envoyer ladite information en réponse à la réception d'une requête émise par le serveur distant, comprenant une commande pour obtenir, en réponse, ladite information, ou en réponse à une étape préalable de mise à jour, par le serveur distant, du système d'exploitation de l'élément sécurisé.

Selon un mode de réalisation particulier, l'élément sécurisé envoie une dite information représentative d'une version de modèle d'élément de profil pour chaque modèle stocké en mémoire de l'élément sécurisé. Cette disposition permet au gestionnaire d'avoir une vue complète de l'état de l'élément sécurisé.

En variante, il peut le faire uniquement pour chaque modèle stocké en mémoire de l'élément sécurisé qui a été modifié lors de la mise à jour préalable du système d'exploitation. Cela réduit la taille de la réponse envoyée par l'élément sécurisé. Le réseau de communication est alors moins encombré, et la charge de traitement pour le gestionnaire est réduite.

Dans le cadre de cette variante, le procédé peut également comprendre, préalablement à l'étape de mise à jour préalable du système d'exploitation (donc par exemple à réception d'une commande de mise à jour de l'OS), une étape de mémorisation d'informations relatives à tout ou partie des modèles d'élément de profil stockés en mémoire de l'élément sécurisé, et
le ou les modèles modifiés lors de la mise à jour préalable du système d'exploitation sont alors identifiés à l'aide des informations mémorisées.

Cette disposition permet d'identifier à faible coût les modèles modifiés par la mise à jour de l'OS.

Dans un autre mode de réalisation, l'information représentative d'une version du modèle d'élément de profil comprend l'un ou plusieurs parmi : un numéro de version dudit modèle, une date d'expiration dudit modèle et une valeur de hachage calculée à partir dudit modèle.

Dans un autre mode de réalisation, la commande de mise à jour du modèle d'élément de profil envoyée par le serveur distant comprend une commande STORE DATA du standard GlobalPlatform.

Dans un mode particulier de réalisation, les différentes étapes des procédés précités sont déterminées par des instructions de programmes d'ordinateurs.

En conséquence, un aspect vise aussi un support d'informations lisible par un microprocesseur, comprenant des instructions d'un programme d'ordinateur pour mettre en œuvre un de ces procédés, lorsqu'elles sont chargées et exécutées par le microprocesseur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Le support d'information peut être n'importe quelle entité ou dispositif capable de stocker le programme. Par exemple, le support peut comprendre un moyen de stockage, tel qu'une ROM, par exemple une ROM de microcircuit, ou encore un moyen d'enregistrement magnétique, par exemple un disque dur, ou encore une mémoire flash.

D'autre part, le support d'information peut être un support transmissible tel qu'un signal électrique ou optique, qui peut être acheminé via un câble électrique ou optique, par radio ou par d'autres moyens. Le programme peut en particulier être téléchargé sur une plateforme de stockage d'un réseau de type Internet, de type communication, ou bien de type télécommunication.

Alternativement, le support d'information peut être un circuit intégré dans lequel le programme est incorporé, le circuit étant adapté pour exécuter ou pour être utilisé dans l'exécution du ou des procédés en question.

Le support d'information contenant le programme d'ordinateur présente des caractéristiques et avantages analogues aux procédés que le programme met en œuvre.

### BREVE DESCRIPTION DES FIGURES

D'autres particularités et avantages de l'invention apparaîtront encore dans la description ci-après, illustrée par les figures ci-jointes qui en illustrent des exemples de réalisation dépourvus de tout caractère limitatif. Sur les figures :
- la **Figure 1** illustre, de manière simplifiée, un exemple de système de communication dans lequel des modes de réalisation de la présente invention peuvent être mis en œuvre ;
- la **Figure 2** représente schématiquement un exemple d'architecture possible pour un élément sécurisé ou un gestionnaire conforme à des modes de réalisation de l'invention ;
- la **Figure 3** représente, sous forme de chronogramme, des étapes d'un procédé de gestion selon un premier mode de réalisation de l'invention ;
- la **Figure 4** représente, sous forme de chronogramme, des étapes d'un procédé de gestion selon un deuxième mode de réalisation de l'invention.

### DESCRIPTION DETAILLEE DE L'INVENTION

De façon générale, l'invention concerne le chargement (incluant la création, l'installation ou la mise à jour) d'un ou plusieurs profils utilisés pour personnaliser un élément sécurisé, profil(s) dont la ou les descriptions s'appuient sur au moins un modèle (*template*). Ces *templates* sont utilisés pour formater les données des éléments de profil constitutifs de profils, afin de faciliter la création de nouveaux profils et leur installation dans l'élément sécurisé.

Conformément à la présente invention, des informations représentatives d'une version de l'au moins un *template* localisé en mémoire de l'élément sécurisé sont envoyées de l'élément sécurisé à un gestionnaire ou serveur distant. Par gestionnaire, nous entendons une entité correspondant, par exemple et de façon non limitative, à au moins un serveur ayant au moins un rôle de préparation et/ou d'installation et/ou de gestion de profils, par exemple, SM-DP (pour *Subscription Manager Data Preparation*) et SM-SR (pour *Subscription Manager Secure Routing*) ou SM-DP+ *(SM-DP enhanced)* et responsable du chargement, de façon sécurisée, des profils vers l'élément sécurisé.

On entend par « version » d'un *template* une édition ou un état donné de l'évolution du *template* à un moment donné. Dans le domaine informatique, il s'agit généralement d'un état jugé stable qui permet l'utilisation du *template* (et plus généralement l'exécution du logiciel considéré).

Par extension, la « version » du *template* fait également référence à une information qui permet d'identifier cet état à un moment donné. Comme on le verra par la suite, cette version est au moins une information parmi la pluralité de celles constituant les *metadata* du modèle et pouvant être de différent type ou orientation, par exemple le *versionning* (version majeur et mineur du modèle) du modèle, la validité du modèle (date d'expiration) et l'authenticité (valeur de hachage) du modèle.

Dans certains modes de réalisation, ces informations de version sont envoyées par l'élément sécurisé en réponse à la transmission, par le gestionnaire/serveur distant, d'une commande à l'élément sécurisé.

Par exemple, la commande peut être une commande de mise à jour de l'élément sécurisé (notamment son système d'exploitation ou OS pour *Operating System*), de telle sorte que les informations sont envoyées lorsque l'élément sécurisé vient d'être mis à jour (par exemple suite à une mise à jour de l'OS) par un serveur tiers. Eventuellement, l'envoi des informations peut être conditionné à d'autres événements, tels qu'une première connexion de l'élément sécurisé mis à jour à un réseau de communication ou un événement permettant, par exemple, une interaction entre l'élément sécurisé et le terminal (*toolkit*) (en d'autres termes l'utilisation d'une commande ou procédure définie par l'interface *toolkit* avec l'élément sécurisé).

Dans d'autres exemples la commande peut être une requête TEMPLATE AUDIT REQUEST, créée par les inventeurs, et dont l'objet est d'obtenir lesdites informations sur tout ou partie des *templates* stockés en mémoire de l'élément sécurisé. Plusieurs événements déclencheurs de cette requête peuvent être envisagés, comme décrits par la suite, incluant l'écoulement d'une durée prédéfinie (pour une interrogation périodique), la demande de chargement d'un profil dans l'élément sécurisé (demande reçue d'un tiers par exemple), la création d'un nouveau profil, la mise à jour ou la péremption d'un *template.*

Les informations recherchées et envoyées par l'élément sécurisé sont celles structurant un *template* et formant ce que l'on appelle les métadonnées ou « *metadata* », dont le rôle est de décrire les caractéristiques du *template.* Actuellement, l'art antérieur, correspondant au standard SIMALLIANCE, ne recense et ne prévoit pour seule métadonnée qu'un numéro d'identification unique OID du *template.* Ce numéro d'identification OID est conservé alors même que le *template* évolue.

Afin de permettre des traitements de compatibilité selon l'invention, les inventeurs se proposent, donc, d'ajouter une ou plusieurs nouvelles informations par l'intermédiaire de nouveaux champs créés à cet effet dans la structure habituelle (*metadata*) des *templates.*

Ainsi selon des modes de réalisation, les nouvelles informations en question peuvent comprendre un ou plusieurs parmi :
un ou plusieurs numéros de version (*versioning* en anglais) du *template,*
une date d'expiration du *template,*
une valeur de hachage calculée sur l'ensemble du *template* (à savoir, en prenant en compte les valeurs des *metadata* du *template* considéré et la valeur du contenu du *template* considéré).

La requête TEMPLATE AUDIT REQUEST, créée par les inventeurs, vise ainsi à récupérer tout ou partie de ces différentes informations constituant les *metadata* d'un ou plusieurs *templates,* permettant alors de déterminer précisément une version du ou des *templates* en mémoire de l'élément sécurisé.

Ces informations demandées peuvent donc être contenues en totalité ou partie (par exemple, une combinaison de ces informations) dans la réponse qui est renvoyée par l'élément sécurisé.

Dans un mode de réalisation sécuritaire, une signature et/ou éventuellement un chiffrement de l'ensemble des informations retournées (voire de toute la partie utile de la réponse) peut être effectué pour assurer l'authenticité de la réponse vis-à-vis de l'élément sécurisé et/ou éventuellement pour assurer l'intégrité des données de la réponse. La décision de chiffrer ou signer tout ou partie des informations contenues dans la réponse peut être fonction d'un indicateur, par exemple un champ « *responseToCipher* », fourni dans la requête du gestionnaire.

A titre illustratif, les informations retournées peuvent être contenues dans une réponse détaillée par la suite, appelée TEMPLATE AUDIT RESPONSE et créée par les inventeurs, à la requête TEMPLATE AUDIT REQUEST.

Les modes de réalisations décrits par la suite se concentrent, par souci de simplification sans être limitatifs, principalement sur les informations de type numéro de version du *template.* Toutefois, tout ou partie des différentes informations *(metadata)* peut être utilisé pour détecter une différence de version entre un *template* stocké, accessible ou utilisé par le gestionnaire et un *template* correspondant (i.e. portant le même identifiant OID) stocké en mémoire de l'élément sécurisé. Egalement, par souci de clarté, ces modes de réalisation prennent principalement pour exemple un seul *template* (« le template »), alors qu'une pluralité de *templates* peut être traitée en même temps dans le cadre de la présente invention.

Selon un premier mode de réalisation, à partir de ces informations, le gestionnaire peut déterminer s'il existe une différence de version entre le *template* localisé dans l'élément sécurisé et un *template* utilisé pour créer un élément de profil au niveau d'un serveur distant, par exemple le SM-DP. L'élément de profil est par exemple créé dans le cadre de la génération d'un nouveau profil à charger dans l'élément sécurisé. Si une différence de version est déterminée, une mise à jour du *template* mémorisé dans l'élément sécurisé peut être opérée afin de le mettre au niveau de celui du gestionnaire, pour qu'il lui soit aligné (c'est-à-dire identique en *metadata* et/ou en données de contenu formant le *template).* Une fois cette mise à jour du *template* de l'élément sécurisé réalisée, le gestionnaire qui a généré le nouveau profil à partir du *template* local peut donc l'envoyer à l'élément sécurisé, lequel peut désormais le traiter correctement à réception car il dispose maintenant du *template* mis à jour, c'est-à-dire dans la même version que celui utilisé pour générer le profil reçu.

Dans le cas où plusieurs *templates* sont mis en jeu pour la génération du nouveau profil à charger (par exemple plusieurs éléments de profil font chacun référence à au moins un *template),* cette mise à jour est, bien entendu, étendue et réalisée pour chacun des *templates* référencés dans le nouveau profil à charger, qui présentent une différence de version avec le même *template* stocké dans l'élément sécurisé.

Selon un second mode de réalisation, les informations reçues permettent au gestionnaire d'identifier la version du *template* stocké dans l'élément sécurisé. Dans ce cas, le gestionnaire peut être mis à jour pour que son *template* soit dans la même version que celui de l'élément sécurisé, et ainsi le gestionnaire peut utiliser le *template* mis à jour (ayant la version identifiée) pour créer un élément de profil du profil à charger dans l'élément sécurisé. De cette façon, le gestionnaire s'assure de générer un profil basé sur la même version de *template* (pour chaque *template)* que celle présente sur l'élément sécurisé. Le gestionnaire envoie ensuite le profil généré à l'élément sécurisé qui le traite à réception à l'aide du *template* stocké en mémoire.

Ainsi, dans ces différents modes de réalisation, l'élément sécurisé est à même de traiter l'élément de profil grâce aux informations *metadata* obtenues par le gestionnaire qui permettent, soit de prévoir une mise à jour du *template* stocké localement au sein de l'élément sécurisé, soit de formater, côté gestionnaire, le profil à charger (et donc tout élément de profil qu'il inclut) de façon à ce qu'il puisse être traité avec le *template* existant au niveau de l'élément sécurisé.

Bien entendu, ces étapes sont décrites pour un seul *template* et un seul élément de profil mais peuvent en principe s'appliquer sans difficulté supplémentaire à tous les éléments de profil d'un profil à charger ainsi qu'aux *templates* correspondants utilisés pour formater leurs données.

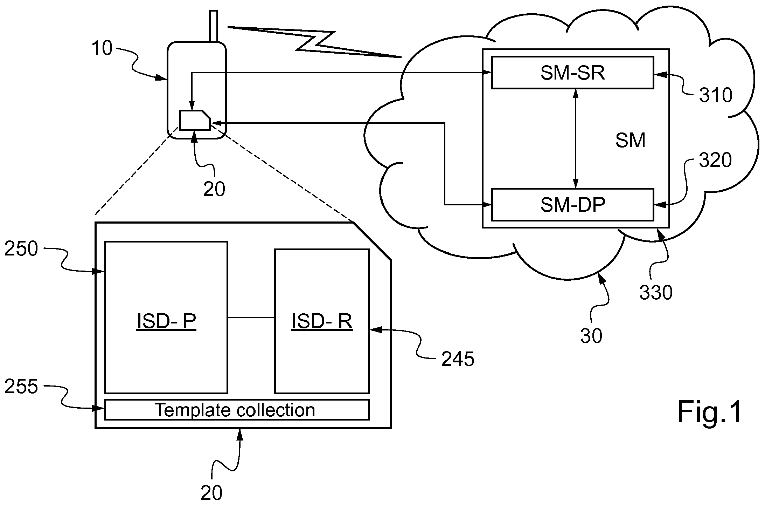

La **Figure 1** illustre, de manière simplifiée, un exemple de système de communication dans lequel des modes de réalisation de la présente invention peuvent être mis en œuvre.

Dans cette représentation schématique apparait un dispositif hôte 10 embarquant un élément sécurisé 20, par exemple une carte eUICC.

Le dispositif hôte 10 est par exemple un terminal mobile, un téléphone portable intelligent (*smartphone* en anglais), une tablette numérique ou encore tout type d'équipement électronique tel qu'un compteur électrique, un véhicule, une machine à café, etc.

Le dispositif hôte 10 et l'élément sécurisé 20 communiquent par exemple au moyen de commandes APDU (pour *Application Protocol Data Unit* en anglais) conformément à la norme ISO 7816.

Bien entendu, un système de communication inclut généralement une pluralité de tels dispositifs hôtes équipés d'éléments sécurisés embarqués. La présente invention met notamment en œuvre des opérations particulières dans l'élément sécurisé embarqué.

Le système de communication comprend également un réseau de communication 30. Ce réseau 30 est par exemple un réseau de téléphonie mobile comprenant de façon classique des stations de base (non représentées) pour connecter les terminaux mobiles, ainsi qu'une pluralité d'entités (type passerelle GMSC, serveurs HLR, MSC, VLR, etc.) non représentées.

De manière générale, le réseau 30 comprend une entité de gestion d'abonnement (ou gestionnaire) SM 330 (*Subscription Manager* en anglais) formant un serveur distant et représentée ici par deux modules serveur distincts : un serveur de transport ou routage sécurisé SM-SR 310 (pour *Subscription Manager Secure Routing* en anglais) et un serveur de préparation de données SM-DP 320 (pour *Subscription Manager Data Preparation* en anglais).

Le serveur de préparation de données SM-DP 320 est notamment en charge de la préparation des données de profils et de la gestion de leur chargement et installation sécurisée sur l'élément sécurisé 20.

Le serveur de routage sécurisé SM-SR 310 est notamment en charge de réaliser, de façon sécurisée, le transport des commandes (et donc de scripts de commandes) de chargement, d'installation et de gestion de profils aux éléments sécurisés du réseau.

Ces deux serveurs sont adaptés à communiquer ensemble au sein de l'entité SM 330, ainsi qu'avec le dispositif hôte 10 et l'élément sécurisé 20 qu'il incorpore. Par soucis de simplification, il est fait par la suite principalement référence à l'entité SM (gestionnaire) lorsqu'il s'agit d'une opération réalisée par l'un ou l'autre des deux serveurs SM-DP et SM-SR, ou tout autre type de serveur participant à la gestion d'abonnement, de profils, de l'élément sécurisé ou de son contenu au sens large.

Dans cet exemple, l'élément sécurisé 20 comprend plusieurs domaines de sécurité, ici deux référencés 245 et 250, tels que définis par la norme GSMA - Remote Provisionning Architecture for Embedded UICC - Technical Specification - Version 3.2 - 27 June 2017*,* et indépendants les uns des autres pour des raisons de sécurité et de confidentialité des données qu'ils mettent en œuvre. L'élément sécurisé 20 comprend également, en mémoire, une collection de *templates* 255 auxquels des profils à installer (et plus précisément des éléments de profil constitutifs de tels profils) font référence.

Un domaine de sécurité principal, noté ISD-R 245 (pour *Issuer Security Domain Root* en anglais), est l'entité représentative, dans l'élément sécurisé, du serveur SM-SR 310. Ainsi, l'ISD-R 245 et le serveur SM-SR 310 sont aptes à communiquer via le réseau 30 selon un protocole de transport sécurisé. En tant que domaine de sécurité principal, l'ISD-R 245 est également en charge de la gestion des autres domaines de sécurité de l'élément sécurisé 20. Notamment, c'est à l'ISD-R 245 de créer un autre domaine de sécurité ISD-P 250 (pour *Issuer Security Domain Profile* en anglais) associé à un serveur SM-DP 320. Bien entendu, d'autres domaines de sécurité ISD-P peuvent être créés au sein de l'élément sécurisé 20 par l'ISD-R. Dans ce cas, d'autres serveurs SM-DP peuvent être prévus au sein du gestionnaire 330.

Des profils peuvent être chargés dans un ou plusieurs de ces domaines de sécurité, pour y être installés, éventuellement comme mise à jour d'un profil précédent.

Dans le cadre de l'invention, l'élément sécurisé 20 contient une collection 255 de un ou plusieurs *templates* au sein de sa mémoire qui ont par exemple été préinstallés par le constructeur au moment de la fabrication ou de l'installation de l'élément sécurisé 20 dans le dispositif hôte 10, ou ont été chargés, par exemple par voie OTA, au cours de la vie de l'élément sécurisé (par exemple lors de la création d'un nouveau ISD-P ou d'un nouvel OS).

Dans certains modes de réalisation, l'ISD-R 245 est également responsable de gérer les *templates* stockés dans l'élément sécurisé (fourniture d'informations sur ces *templates,* mise à jour).

Généralement, le serveur SM-DP 320 est configuré pour préparer les données d'un profil sous forme de script de commandes ou « script d'installation », formé par exemple d'une liste de C-APDU (commandes APDU) définies dans la norme ETSI TS 102 226. Comme mentionné précédemment, un tel profil comprend une pluralité d'éléments de profil généralement formatés selon des modèles prédéfinis (*templates*) accessibles par le serveur SM-DP 320.

Qu'il s'agisse de la collection de *templates* stockée sur l'élément sécurisé 20 ou accessible par le gestionnaire, les *templates* comportent chacun des *metadata* qui incluent sensiblement les mêmes informations, à savoir notamment un OID et tout ou partie d'un numéro de version (par exemple composé d'une version majeure et d'une version mineure) du *template,* d'une date d'expiration du *template* et d'une valeur de hachage ou empreinte du *template.*

A titre illustratif, la valeur de hachage/empreinte peut être basée sur l'utilisation d'un algorithme SHA256, appliqué sur les valeurs des *metadata* et sur le contenu (description de l'élément de profil) du *template* considéré. Le calcul de ce hachage peut être effectué en amont de la mémorisation du *template* sur l'élément sécurisé ou le gestionnaire, de façon à pouvoir être stocké en même temps que les autres *metadata* constituantes du *template.*

Selon le premier mode de réalisation de l'invention déjà évoqué plus haut, avant que les éléments d'un nouveau profil à charger dans un élément sécurisé soient envoyés à l'élément sécurisé, par exemple en réponse à une instruction de chargement de profil, l'invention vérifie que les *templates* présents sur l'élément sécurisé correspondent bien (en terme de version par exemple) à ceux qui ont été utilisés pour formater les éléments de profil du profil à charger. Si ces *templates* diffèrent, ils sont mis à jour, par exemple au niveau de l'élément sécurisé, avant l'envoi du script.

Selon le second mode de réalisation déjà évoqué, on fait en sorte d'identifier les *templates* présents sur l'élément sécurisé, notamment leur version, afin d'utiliser, au niveau de l'entité SM 330 (gestionnaire), des *templates* ayant les mêmes versions pour générer les éléments de profil constitutifs du profil à charger.

Une fois les *templates* nécessaires mis à jour soit dans l'élément sécurisé pour correspondre à ceux utilisés pour générer le profil à charger, soit dans l'entité SM 330 pour générer le profil à charger avec les mêmes versions que ceux stockés dans l'élément sécurisé, l'entité SM 330 est chargée de transmettre, à l'élément sécurisé, le profil généré à charger, et donc les différents éléments de profil créés qui référencent les *templates* utilisés (via les OID).

A cette fin, l'entité SM 330 est configurée pour partitionner ou segmenter le script d'installation (i.e. le profil généré), par exemple en fonction des éléments de profil qu'il comprend, en une pluralité de blocs binaires formant des paquets à envoyer à l'élément sécurisé 20.

De façon classique, l'entité SM 330 peut communiquer de manière sécurisée avec l'ISD-R 245 à qui il transmet les paquets au cours de sessions sécurisées (par exemple en utilisant le protocole sécurisé SCP81).

A réception, l'ISD-R 245 décrypte chaque paquet reçu et le transmet à l'ISD-P 250. A réception de tout ou partie des paquets, le traitement des éléments de profil peut débuter, consistant notamment à récupérer, en mémoire locale, les *templates* à jour ou mis à jour qui sont référencés par ces éléments de profil reçus, et ainsi à écrire en mémoire de l'élément sécurisé les éléments de profil reconstitué (après fusion). Il résulte que le profil est alors installé (donc chargé) en mémoire de l'élément sécurisé.

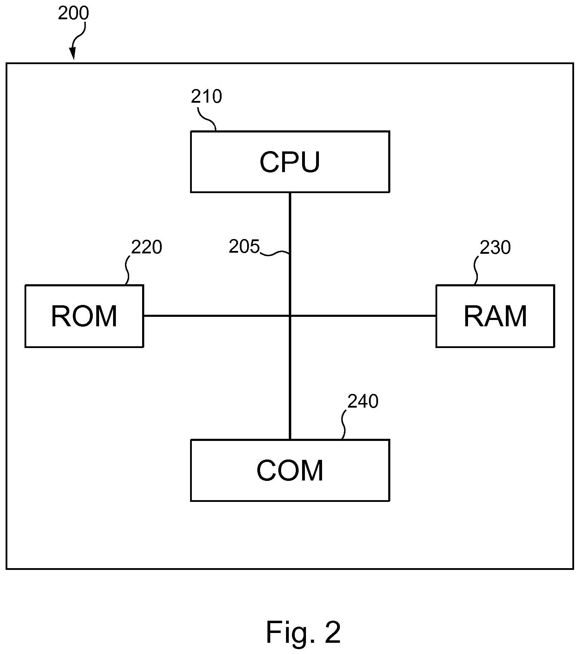

La **Figure 2** représente schématiquement un exemple d'architecture possible pour un élément sécurisé, par exemple l'élément sécurisé 20 de la **Figure 1****,** ou un gestionnaire, par exemple l'entité SM 330 de la Figure 1, conforme à des modes de réalisation de l'invention.

Cette architecture 200 comprend notamment un bus de communication 205 auquel sont reliées :
- une unité de traitement 210 -ou microprocesseur- notée CPU (pour Central Processing Unit) ;
- une mémoire non volatile 220 par exemple ROM (pour Read Only Memory), EEPROM (pour Electrically Erasable Read Only Memory) ou encore Flash;
- une mémoire vive 230 ou mémoire cache ou mémoire volatile par exemple RAM (pour Random Access Memory) ; et
- une interface de communication COM 240 adaptée à échanger des données avec une autre entité via un réseau ou une interface de lecture/écriture (e.g. interface ISO 7816).

La mémoire vive 230 comprend des registres adaptés à l'enregistrement des variables et paramètres créés et modifiés au cours de l'exécution d'un programme informatique comprenant des instructions pour la mise en œuvre d'un procédé selon l'invention. Les codes d'instructions du programme stocké en mémoire non-volatile 220 sont chargés en mémoire RAM 230 en vue d'être exécutés par l'unité de traitement CPU 210.

La mémoire non-volatile 220 est par exemple une mémoire réinscriptible de type EEPROM ou mémoire Flash pouvant constituer un support au sens de l'invention, c'est-à-dire pouvant comprendre un programme informatique comprenant des instructions pour la mise en œuvre d'étapes d'un procédé selon l'invention.

Dans le cadre de l'invention, elle peut notamment comprendre la collection de *templates* stockée dans l'élément sécurisé ou dans le gestionnaire 330.

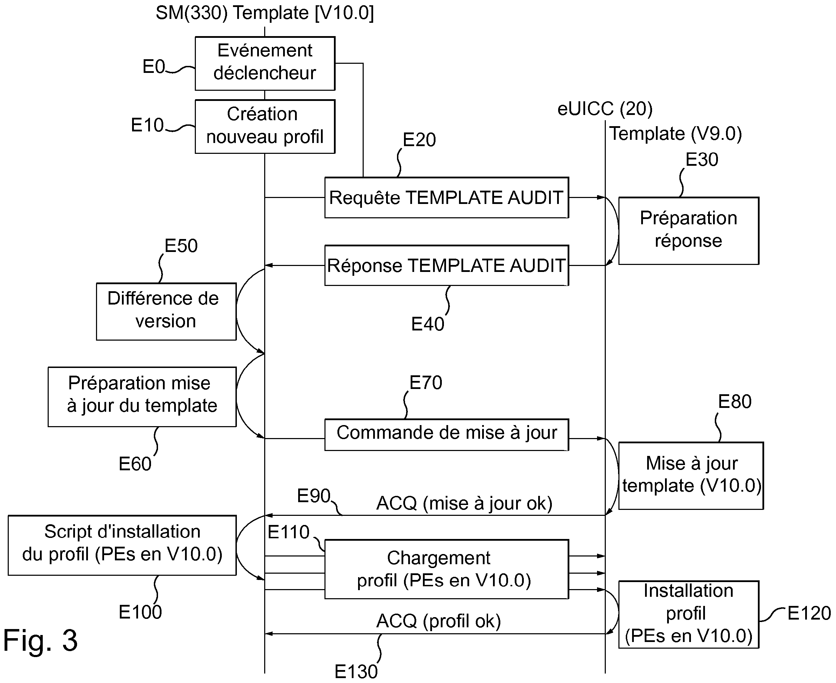

La **Figure 3** représente, sous forme de chronogramme, des étapes d'un procédé de gestion selon une réalisation du premier mode de réalisation de l'invention évoqué plus haut. Ces étapes peuvent être mises en œuvre par les différents éléments représentés sur la **Figure 1****,** notamment l'entité SM 330 et l'eUICC 20.

Dans cette réalisation, au cours d'une étape E10, le gestionnaire SM 330, via, par exemple, le serveur SM-DP 320, crée un nouveau profil composé d'éléments de profil formatés à l'aide d'un ou plusieurs *templates.*

Cette étape peut être déclenchée par la réalisation (E0) d'un événement déclencheur parmi l'écoulement d'une durée prédéfinie au niveau du gestionnaire, une demande de chargement d'un nouveau profil dans l'eUICC 20 reçue d'un tierce partie, la mise à jour d'un modèle stocké dans une mémoire accessible par le gestionnaire et la péremption d'un tel modèle.

Cela inclut par exemple que l'entité SM 330 reçoit une instruction de création et de chargement d'un nouveau profil dans l'eUICC 20. Cette instruction, manuelle ou automatique, peut, suivant le cas, provenir de la part d'un utilisateur du dispositif hôte 10 ou bien d'un opérateur.

Egalement, si un *template* stocké localement par le gestionnaire se trouve périmé et donc potentiellement mis à jour, il convient de mettre à jour l'eUICC 20 avec des profils mis à jour s'appuyant sur le nouveau *template.*

A titre illustratif, on suppose qu'un seul *template* a été utilisé et que sa version est notée « V10.0 » pour 10^{ème} version. Il est rappelé que la notion de version de *template* est une création des inventeurs pour faciliter la gestion des *templates* étant donné qu'ils sont chacun caractérisés par un unique OID qui reste inchangé lorsque le *template* en question est modifié/mis à jour, par exemple lorsqu'il change de format.

La représentation d'une version d'un *template* est par exemple composée de deux numéros de version séparés, par exemple, d'une virgule ou d'un point, correspondant à un numéro de version majeure (valeur entière située, par exemple, devant le point) et d'un numéro de version mineure (valeur décimale située, par exemple, après le point).

Dans notre exemple, la version du template étant notée V10.0, cela correspond donc à un numéro de version majeure « 10 » et à un numéro de version mineure « 0 ».

Dans l'exemple décrit, l'eUICC 20 dispose, en mémoire, de la version V9.0 du *template* en question. Donc, dans l'exemple, le *template* stocké en mémoire de l'eUICC 20 correspond à une version plus ancienne que celle du *template* dont dispose le gestionnaire SM 330 pour créer un nouveau profil à charger dans l'eUICC 20.

Bien entendu, ceci n'est qu'un exemple à but illustratif et la présente invention n'y est pas limitée. Ainsi, d'autres versions de *templates* pourraient être utilisées, caractérisées par une ou des *metadata* différentes (numéro de version, date d'expiration, hash du template) associées aux *templates.*

Egalement en réponse à l'événement déclencheur E0, le gestionnaire SM 330 souhaite vérifier la compatibilité, avec l'eUICC cible 20, du profil créé à partir d'un ou plusieurs *templates* identifiés par leurs OIDs. Pour ce faire, le gestionnaire tente d'obtenir au moins une information *(metadata)* représentative d'une version de *template* pour au moins ces *templates* identifiés par les OID ci-dessus et stockés dans l'eUICC 20. Cette étape peut être réalisée en parallèle de l'étape E10, voire avant celle-ci.

Pour ce faire, au cours d'une étape E20, le gestionnaire SM 330 génère et envoie, à l'eUICC 20, une requête d'audit visant à obtenir, en réponse, ces informations. Cette requête d'audit peut prendre la forme d'une commande notée ici TEMPLATE AUDIT REQUEST.

Comme décrit ci-dessous, une telle commande permet d'obtenir des informations, correspondant à tout ou partie des *metadata* associées à un ou plusieurs ou tous les *templates* stockés sur l'eUICC 20.

Cette commande TEMPLATE AUDIT REQUEST est une création des inventeurs, et n'est donc pas décrite par la SIMALLIANCE.

La notation ASN.1 (pour *Abstract Syntax Notation One* en anglais), permettant une description standardisée de structure de données, est retenue ici pour présenter le format de la commande créée, de même que pour ses données la composant.

Ainsi, par exemple, le format suivant est proposé pour décrire la commande TEMPLATE AUDIT REQUEST utilisée:

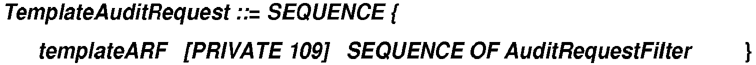

Il s'agit donc d'une commande qui comporte une séquence de un ou plusieurs éléments ***templateARF*** au format ***AuditRequestFilter.*** L'élément ***templateARF*** définit les informations (*metadata*) souhaitées pour un ou plusieurs *templates* objets de l'audit.

En détail, le format ***AuditRequestFilter*** d'un tel élément peut être comme suit :

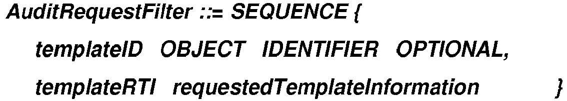

Il s'agit à nouveau d'une séquence dont le premier élément ***templateID*** identifie un ou plusieurs *templates* objets de l'audit, et le deuxième élément ***templateRTI*** liste les informations *(metadata)* souhaitées vis-à-vis du ou des *templates* identifiés via l'élément ***templateID*** considéré.

A titre d'exemple purement illustratif, une requête peut contenir la séquence suivante de ***templateARF,*** relative à une demande concernant différents *templates* (OID_1, OID_42, OID_13, OID_54, OID_5, OID_8) voir tous :

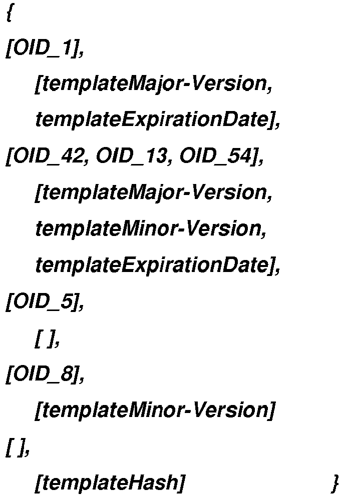

Notamment, le champ ***templateID*** peut comprendre une liste d'identifiants OID identifiant de façon unique des *templates* pour lesquels les informations *metadata* sont demandées. Par liste, il faut comprendre qu'au moins un OID y figure. C'est par exemple le cas du premier bloc de l'exemple précédent listant le seul OID OID_1, mais aussi du deuxième bloc listant les OIDs OID_42, OID_13 et OID_54.

Dans certains modes de réalisation, des OIDs « groupes » peuvent être utilisés et connus du gestionnaire et des éléments sécurisés. Un OID groupe permet par exemple de désigner une famille de *template* à l'aide d'un seul OID.

Dans certains modes de réalisation, l'absence d'OID dans le champ ***templateID*** (c'est-à-dire une liste vide) définit implicitement que tous les *templates* stockés dans l'eUICC 20 sont ciblés. C'est le cas du dernier bloc de l'exemple précédent.

Le champ ***templateRTI*** liste, quant à lui, les différentes informations *(metadata)* souhaitées en réponse, pour chacun des *templates* listés dans le champ ***templateID*** correspondant.

Dans un mode de réalisation, si aucune information n'est indiquée dans ce champ (champ vide par exemple), ce dernier peut implicitement définir que l'ensemble des *metadata* du ou des *templates* considérés est souhaité en retour. C'est par exemple le cas du troisième bloc de l'exemple précédent s'appliquant à l'OID_5.

A titre illustratif, le champ ***templateRTI*** peut être composé de l'élément ***requestedTemplateInformation,*** décrit ci-après, pour lister les différentes informations demandées :

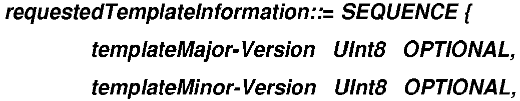

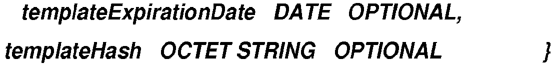

Il s'agit dans cette exemple d'une liste définissant si un numéro de version du/des modèles concernés et/ou une date d'expiration du/des modèles concernés et/ou une valeur de hachage calculée à partir de chaque modèle concerné est/sont souhaités.

Notamment, ***templateMajor-Version*** est un champ qui, lorsqu'il est positionné dans la commande, indique que le numéro de version principale dite majeure (de type, par exemple, entier non signé **(*UInt8*))** du ou des *templates* ciblés (dans le champ ***template ID***) est souhaité.

Si, par exemple, le *template* visé est en version v1.3, alors la valeur qui est retournée pour le champ ***templateMajor-Version*** est *1.*

***templateMinor-Version*** est un champ qui, lorsqu'il est positionné dans la commande, indique que le numéro de sous-version (de type, par exemple, entier non signé **(*UInt8*))** du ou des *templates* ciblés est souhaité.

Si, par exemple, le *template* visé est en version v1.3, alors la valeur qui est retournée pour le champ ***templateMinor-Version*** est 3.

***templateExpirationDate*** est un champ qui, lorsqu'il est positionné dans la commande, indique que la date d'expiration du ou des *templates* ciblés est souhaitée.

***templateHash*** est un champ qui, lorsqu'il est positionné dans la commande, indique que la valeur de hachage/empreinte liée à chacun du ou des *templates* ciblés est souhaitée.

La commande TEMPLATE AUDIT REQUEST permet donc de demander une ou plusieurs informations *(metadata)* relatives à un ou plusieurs *templates* stockés en mémoire de l'eUICC 20. Le champ ***requestedTemplateInformation*** définit ces informations souhaitées, alors que le champ ***templateID*** définit le ou les *templates* ciblés.

A noter qu'une commande TEMPLATE AUDIT REQUEST ayant été formatée avec une liste d'informations désirées **(*requestedTemplateInformation*)** vide demande toutes les informations (*metadata*) du au moins un *template* ciblé, comme référencé dans la liste non vide ***templateID.***

Une commande TEMPLATE AUDIT REQUEST ayant été formatée avec une liste d'identification de *templates* **(*templateID*)** vide demande la au moins une information *(metadata)* référencée dans la liste non vide ***requestedTemplateInformation,*** pour tous les *templates* stockés en mémoire de l'eUICC 20.

Enfin, une commande TEMPLATE AUDIT REQUEST ayant été formatée avec une liste d'identification de *templates* **(*templateID*)** vide et une liste d'informations désirées **(*requestedTemplateInformation*)** vide demande donc toutes les informations *(metadata)* pour tous les *templates* stockés en mémoire de l'eUICC 20.

La liste des champs mentionnés ci-dessus n'est nullement limitative et d'autres champs peuvent être prévus. Par exemple, d'autres champs définissant les informations souhaitées au sein des *metadata* associées aux *templates* peuvent être prévus pour faire varier les informations demandées.

Pour que l'eUICC 20 puisse comprendre la commande TEMPLATE AUDIT REQUEST, cette dernière, représentée ci-dessus au format ASN.1, est convertie, avant envoi, par le gestionnaire SM 330 dans un format compréhensible par l'eUICC. Par exemple, elle est convertie en une commande de type case 4 selon la description faite dans le standard ISO7816-4 (par exemple, en une commande GET DATA du standard GlobalPlatform), basée sur une structure TLV (pour *Tag Length Value* en anglais).

La commande GET DATA représentative de la requête d'audit TEMPLATE AUDIT REQUEST est ainsi envoyée par le gestionnaire à l'eUICC 20, qui la reçoit donc.

Au cours d'une étape E30, la requête comprenant la commande GET DATA, correspondant à une représentation exploitable par l'ISD-R de la description ASN.1 de la commande TEMPLATE AUDIT REQUEST **(*templateAuditRequest*),** est traitée par l'ISD-R de l'eUICC 20.

Le traitement comprend la récupération des *templates* stockés localement qui sont identifiés par les OID du ou des champs ***templateID*** de la requête, puis la récupération des informations demandées telles qu'identifiées dans le ou les champs ***templateRTI*** correspondants. Comme indiqué ci-dessus, il s'agit par exemple de la version principale et/ou sous-version et/ou la date d'expiration et/ou la valeur de hachage de chaque *template* ciblé.

Ces informations sont compilées dans une réponse à la commande GET DATA. De même que pour la requête TEMPLATE AUDIT REQUEST, cette réponse dédiée est une création des inventeurs. A titre illustratif, cette réponse notée ***TemplateAuditResponse*** peut être structurée comme suit, décrite sous format ASN.1 :

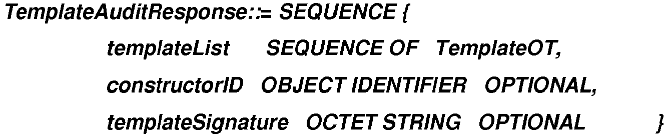

Il s'agit d'une liste dans laquelle une première partie est une séquence de un ou plusieurs champs ou éléments, ***templateList,*** au format *TemplateOT* (décrit ci-après) qui listent chacun un identifiant de *template* (OID) ciblé par la commande TEMPLATE AUDIT REQUEST et finalement trouvé dans l'eUICC 20, ainsi que les informations demandées qui lui sont associées. Notamment, si la requête d'audit n'indique pas de *templates* particuliers (liste ***templateID*** vide) et/ou d'information demandée particulière (liste ***requestedTemplateInformation*** vide), cette séquence de ***templateList*** permet d'identifier chaque *template* stocké sur l'eUICC 20 et les informations retournées.

Si aucun *template* ciblé n'est présent sur l'eUICC 20 (par exemple l'eUICC n'a aucun *template),* alors aucune information n'est retournée dans la réponse. D'une façon plus générale, si un *template* ciblé n'est pas en mémoire de l'eUICC, alors aucune information correspondante n'est retournée dans un champ ***templateList*** de la réponse. Cela permettra au gestionnaire de savoir quels *templates* sont manquants (par rapport à la liste ciblée).

Un exemple de représentation ASN.1 de l'élément ***TemplateOT*** est proposé ci-après :

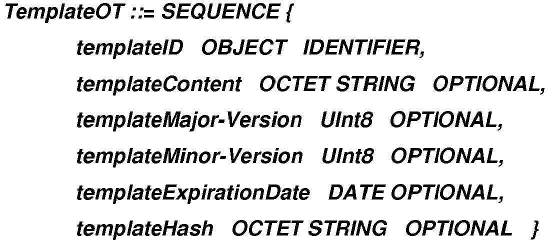

Il s'agit d'une liste pour un *template* particulier (identifié par le champ ***templateID*** indiquant l'OID correspondant) précisant les informations demandées pour ce *template : **templateMajor-Version*** (numéro de version principale dite majeure), ***templateMinor-Version*** (numéro de sous-version), ***templateExpirationDate*** (date d'expiration) et/ou ***templateHash*** (valeur de hachage ou empreinte).

Le champ ***templateContent*** (décrit plus bas en lien avec la commande de mise à jour d'un *template)* n'est pas utilisé dans la commande TEMPLATE AUDIT REQUEST. Il pourrait être supprimé de cette description de la requête d'audit. Toutefois, aux fins de compacité, il est choisi d'utiliser le même format ***TemplateOT*** dans cette requête et dans la commande de mise à jour d'un *template* décrite par la suite.

Bien entendu, d'autres informations peuvent aussi être demandées, dès lors qu'elles sont prévues (comme métadonnée associée aux *templates).*

Les autres champs, ***constructorID*** et ***templateSignature,*** de la réponse TEMPLATE AUDIT RESPONSE sont optionnels et permettent d'authentifier la réponse en provenance de l'eUICC 20.

Notamment, le champ ***constructorID*** peut comprendre un identifiant du constructeur de l'eUICC 20. Cette information peut permettre au gestionnaire d'identifier, par exemple, auprès de quel serveur ou constructeur il convient de récupérer la mise à jour de *templates* pour l'eUICC considéré.

Le champ ***templateSignature*** peut contenir une signature cryptographique de la réponse ***TemplateAuditResponse**.* Il peut s'agir d'une signature sur l'ensemble de la réponse ou sur les informations retournées (notamment la séquence de champs ***templateList*),** utilisant par exemple une clé de chiffrement de l'ISD-R selon un mode clé privée / clé publique. Le gestionnaire SM 330 (par exemple, SM-SR ou SM-DP) peut alors vérifier la signature reçue. Cette vérification permet ainsi d'authentifier l'origine du *template* et/ou des metadata retournées.

La réponse TEMPLATE AUDIT RESPONSE permet ainsi de fournir, au gestionnaire SM 330, l'ensemble des informations associées aux *templates* ciblés par la requête d'audit que l'eUICC stocke en mémoire. Il peut arriver que l'eUICC 20 ne dispose pas de certains *templates* ciblés par la requête, auquel cas la réponse ne retourne aucune information sur ceux-ci.

Une fois élaborée, la réponse TEMPLATE AUDIT RESPONSE est envoyée par l'eUICC 20 au gestionnaire SM 330 au cours d'une étape E40, permettant à ce dernier d'obtenir une information représentative d'une version d'un modèle d'élément de profil stocké en mémoire de l'élément sécurisé, ou plus.

A réception, le gestionnaire SM 330 vérifie éventuellement la signature de la réponse à l'aide de la clé de chiffrement évoquée ci-dessus pour valider l'authenticité de la réponse.

Puis, au cours d'une étape E50, le gestionnaire SM 330 compare les informations reçues avec des informations associées au *template* ou aux *templates* qui ont été utilisées pour créer le nouveau profil à charger lors de l'étape E10. Cette comparaison permet de déterminer s'il existe une différence de version entre chaque version de *template* obtenue par les informations reçues et une version du même *template* (i.e. avec le même identifiant OID) stocké dans une mémoire accessible par le gestionnaire et utilisé pour générer le profil lors de l'étape E10,

Dans un mode de réalisation, la comparaison s'appuie sur un numéro de version associé au *template* considéré.

Il faut noter que deux *templates* référencés par le même OID mais ayant des versions principales différentes (par exemple V1.1 pour l'un des templates (soit un *templateMajor-version* positionné à 1) et V2.1 pour l'autre (soit un *templateMajor-version* positionné à 2)) sont incompatibles, c'est-à-dire que des données formatées avec l'un de ces *templates* ne peuvent pas être comprises à l'aide de l'autre *template* (par exemple, la longueur d'une donnée du *template* considéré est devenue différente d'une version à une autre). Une mise à jour du template peut alors être préconisée.

Par contre, deux *templates* référencés par le même OID, ayant une même version principale, mais des sous-versions différentes (par exemple V1.1 pour l'un des *templates* (soit un *templateMinor-version* positionné à 1) et V1.2 pour l'autre (soit un *templateMinor-version* positionné à 2)) peuvent être rétro-compatibles, c'est-à-dire que des données formatées avec l'un de ces *templates* peuvent être comprises à l'aide de l'autre *template,* même si des erreurs peuvent apparaitre dûes au fait, par exemple, d'une différence de la valeur des données du *template* (par exemple modification d'une valeur stockée dans un fichier ou bien, par exemple, modification d'un paramètre utilisé pour réaliser une authentification). Là aussi, une mise à jour peut alors être préconisée.

Le gestionnaire SM 330 peut donc récupérer le numéro de version principale et/ou le numéro de sous-version du *template* utilisé pour la création du profil lors de l'étape E10 (V10.0 dans l'exemple de la **Figure 3****),** récupérer également le numéro de version principale et/ou sous-version du même *template* (même OID) telle que fourni dans la réponse TEMPLATE AUDIT RESPONSE reçue à l'étape E40 (V9.0 dans l'exemple de la **Figure 3****),** puis comparer ces numéros entre eux.

Dans l'exemple de la **Figure 3****,** le gestionnaire SM 330 est ainsi capable de déterminer l'existence d'une différence de versions.

Dans un autre mode de réalisation, la comparaison s'appuie sur la date d'expiration associée aux *templates.* Classiquement le gestionnaire SM 330 dispose, en mémoire, des dernières versions des *templates,* car il est plus facile de mettre à jour le gestionnaire qu'une multitude d'eUICCs disséminées çà et là.

La comparaison E50 peut directement comparer la date d'expiration (à jour) du *template* utilisé pour la création du profil lors de l'étape E10 avec celle du même *template* (même OID) telle que fournie dans la réponse TEMPLATE AUDIT RESPONSE reçue à l'étape E40.

De façon plus simple, le gestionnaire SM 330 peut simplement comparer la date d'expiration reçue dans la réponse TEMPLATE AUDIT RESPONSE avec le moment présent, pour déterminer directement si la date d'expiration reçue est dépassée, atteinte ou non.

Dans un autre mode de réalisation, la comparaison s'appuie sur la valeur de hachage associée aux *templates.*

La valeur de hachage permet à elle seule de détecter une différence globale entre deux *templates* (celui utilisé pour créer le profil à charger, et l'autre stocké dans l'eUICC) et permet donc de déterminer qu'il existe une différence de version entre ces *templates.* Elle permet aussi d'assurer l'intégrité des *templates* dans leur ensemble (*metadata* et contenu) ainsi que de pouvoir détecter, de façon plus fine, une différence potentielle globale au niveau du contenu des deux *templates* (référencés par le même OID).

En pratique, le gestionnaire SM 330 calcule la valeur de hachage pour le *template* utilisé pour créer le nouveau profil à l'étape E10, ou la récupère si elle est déjà disponible (par exemple dans les métadonnées associées à ce *template*). Puis le gestionnaire compare cette valeur de hachage avec celle contenue dans la réponse TEMPLATE AUDIT RESPONSE pour le même *template* (avec le même OID).

De manière plus évoluée, le numéro de la version principale et/ou de la sous-version et/ou la date d'expiration et/ou la valeur de hachage du *template* permet d'assurer une granularité plus fine quant à la comparaison de deux *templates* ayant le même OID (l'un utilisé pour créer le profil à charger, et l'autre stocké dans l'eUICC) et donc quant à la déduction d'au moins une différence de version entre eux.

En effet, la comparaison de la valeur de hachage associée à la comparaison d'une ou des autres valeurs (*metadata*) parmi celles retournées permet avantageusement de détecter où se situe la différence entre deux *templates* ayant le même OID, à savoir soit dans l'une des *metadata* associées aux *templates,* soit dans leur contenu.

Aussi, une détermination d'une différence de version peut être basée sur des informations de natures différentes.

A l'étape E50, le gestionnaire SM 330 détermine ainsi s'il existe une différence entre un *template* utilisé pour la création du nouveau profil et le *template* ayant le même OID dans l'eUICC. Bien entendu, cette opération est préférentiellement menée pour chaque *template* utilisé pour la création du nouveau profil.

Si d'aventure l'eUICC 20 venait à ne pas fournir d'information sur un *template* ciblé par la requête d'audit (généralement parce qu'elle n'en détient pas une version en mémoire), une différence de version est automatiquement détectée par le gestionnaire SM 330.

Si aucune différence de version n'est observée à l'étape E50 à partir des informations reçues en E40, le procédé va directement à une étape E100 qui sera décrite ci-dessous.

Dans un mode de réalisation, le gestionnaire SM 330 est capable à partir des informations reçues de déterminer si une éventuelle différence de version est minime, c'est-à-dire offrant une compatibilité de fonctionnement satisfaisante (pas suffisamment différente pour entrainer des problèmes, lors du traitement de l'élément de profil correspondant, de nature à empêcher l'installation ou l'exécution du nouveau profil). C'est par exemple le cas si les deux *templates* diffèrent seulement d'une sous-version. Dans ce cas, le *template* sur l'eUICC 20 peut ne pas être mis à jour et le procédé continue directement à l'étape E100.

En revanche, si une différence importante de version est détectée, la version du *template* sur l'eUICC 20 n'est pas compatible avec le profil créé et à charger. Cette situation nécessite alors la mise à jour du *template* présent sur l'eUICC. Cette mise à jour peut consister à mettre à jour au moins l'une des metadata et/ou le contenu du *template* ciblé.

Par ailleurs, en cas d'absence, en mémoire de l'eUICC 20, d'une version de *template* ciblé, la gestionnaire SM 330 peut alors décider de charger ce *template* dans l'eUICC 20. Ce chargement est également une mise à jour du *template.*

Ainsi, au cours de l'étape E60, le gestionnaire SM 330 prépare la mise à jour du *template.* Dans ce cadre, le gestionnaire SM 330 peut éventuellement récupérer en amont le *template* à jour auprès d'un serveur dédié du constructeur qui a été indiqué dans le paramètre ***constructorID*** retourné dans la réponse TEMPLATE AUDIT RESPONSE. Cette préparation E60 comprend la génération d'une (ou plusieurs) commande de mise à jour visant à mettre à jour le *template* dans l'eUICC.

Bien entendu, plusieurs mises à jour sont effectuées si la réponse TEMPLATE AUDIT RESPONSE permet d'identifier plusieurs différences de version importante entre des *templates* utilisés pour créer le nouveau profil à charger et les *templates* correspondants stockés sur l'eUICC 20.

Par exemple, la description, selon le format ASN.1, de la commande générique de mise à jour peut être la suivante :

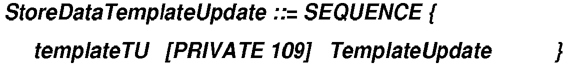

Il s'agit donc d'une commande qui comporte un unique champ ***templateTU*** au format ***TemplateUpdate.*** Le champ ***templateTU*** identifie un ou plusieurs *templates* (via leurs OID) et fournit les données/informations de mise à jour (une donnée constituant au moins un paramètre des *metadata* du *template* et/ou une donnée de contenu du *template*).

En détail, le format ***TemplateUpdate*** d'un tel champ peut être comme suit :

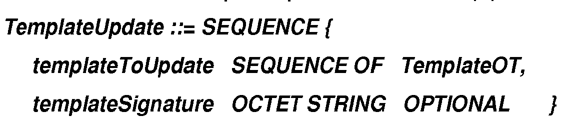

Il s'agit d'une liste dans laquelle une première partie est une séquence d'un ou plusieurs champs ***templateOT*** décrit plus haut formant l'élément templateToUpdate.

Chaque champ correspond à un *template* (identifié par son OID dans le ***templateID*)** et fournit les informations de mise à jour qui incluent toute ou partie du contenu même du *template **(templateContent),*** du numéro de version principale dite majeure **(*templateMajor-Version*),** du numéro de sous-version **(*templateMinor-Version*),** de la date d'expiration **(*templateExpirationDate*)** et de la valeur de hachage ou empreinte **(*templateHash*)***.*

Le contenu ***templateContent*** du *template* faisant partie des champs constitutifs de *TemplateOT,* est le modèle en lui-même c'est-à-dire l'ensemble des données ou valeurs décrivant, par défaut, un élément de profil, par exemple taille d'un fichier, longueur d'un record, valeur d'un paramètre, .... Dans le cadre de l'exemple de la **Figure 3****,** il peut s'agir des données et valeurs du modèle V10.0. En variante, seules les modifications de données et valeurs entre la version V9.0 (détenue par l'eUICC) et la version V10.0 sont envoyées. Dans un mode de réalisation avec mise à jour, tout ou partie des *metadata* et du contenu, la valeur de hachage est toujours présente. En effet, le calcul de cette valeur dépend de la valeur des *metadata* et contenu du template donc s'il y a le moindre changement, la valeur de hachage est de préférence recalculée et fait partie de la mise à jour pour que cette dernière soit acceptée lors du contrôle, par l'eUICC, de la valeur de hachage prenant en compte ce changement. Aussi, les numéros de version principale et de sous-version sont généralement mis à jour lorsque le contenu du *template* est modifié. La possibilité de pouvoir mettre à jour uniquement la date d'expiration est offerte accompagnée de la nouvelle valeur de hachage du *template* inhérente à cette mise à jour de la date d'expiration.

Le champ suivant, ***templateSignature,*** contient une éventuelle signature cryptographique de la commande de mise à jour. Elle est par exemple calculée sur l'ensemble du champ ***templateToUpdate*** à l'aide d'une clé de chiffrement du gestionnaire SM 330 selon un mode clé privée / clé publique. Cette signature permet à l'eUICC destinataire de la commande de mise à jour d'authentifier l'origine des données reçues (soit du *template ou des templates* considérés).

Pour que l'eUICC 20 puisse comprendre la commande de mise à jour, cette dernière, représentée ci-dessus au format ASN.1, est convertie, avant envoi, par le gestionnaire SM 330 dans un format compréhensible par l'eUICC. Par exemple, elle est convertie en une commande de type STORE DATA du standard GlobalPlatform, basée sur une structure TLV (pour *Tag Length Value* en anglais).

Suivant la longueur des données de la commande de mise à jour (répétition de plusieurs structures, chacune comportant un OID et les informations/contenus de mise à jour du *template* considéré), une ou plusieurs commandes STORE DATA peuvent être utilisées. Par exemple, une commande STORE DATA peut être utilisée pour chaque *template.*

Dans le cas particulier où la réponse TEMPLATE AUDIT RESPONSE permet d'identifier qu'un *template* manque sur la carte (applicable à plusieurs *templates* manquants), la commande de mise à jour consiste en fait à une commande de création de ce *template* manquant. La même commande STORE DATA est utilisée.

La commande STORE DATA représentant la commande de mise à jour est ainsi envoyée à l'étape E70 par le gestionnaire à l'eUICC 20, qui la reçoit donc. Cet envoi est par exemple réalisé par voie OTA basée (par exemple) sur le protocole de transport sécurisé SCP080 en cas d'utilisation du protocole de communication SMS (« Short Message Service »), ou basée sur le protocole de transport sécurisé SCP081 en cas d'utilisation de protocole de communication HTTPs.

La commande de mise à jour entre dans le cadre d'une gestion à distance de l'élément sécurisé pouvant être de type RAM (pour « *Remote Application Management* »), voire RFM (pour « *Remote File Management »).*

Au cours d'une étape E80, l'eUICC 20 réceptionne donc la ou les commandes de mise à jour (STORE DATA) et la ou les exécute de façon classique. C'est la mise à jour du ou des *templates* proprement dite.

L'exécution peut notamment comprendre la vérification de la signature ***templateSignature*** afin de garantir l'origine de la commande (ou des commandes) de mise à jour reçue.

L'exécution peut également comprendre la vérification de l'intégrité et l'origine des différentes données et informations constituant chaque champ de_l'élément_***temp*/*ateOT*** constituant l'élément ***templateToUpdate.*** Pour ce faire, l'eUICC peut calculer sa propre valeur de hachage sur la base des données et informations reçues et contenues dans un élément ***templateOT*** considéré, complétées par celles actuellement stockées en mémoire et relatives à un même OID, si une partie des données et informations ne sont pas présentes dans les champs de l'élément ***templateOT*** considéré de l'élément ***templateToUpdate*** reçu. Puis l'eUICC la comparer avec la valeur de hachage reçue pour ce même élément templateOT représentatif d'un *template* considéré. Ainsi, si les deux valeurs de hachage ne sont pas identiques, le *template* considéré (c'est-à-dire l'élément ***templateOT*** considéré constitutif de l'élément ***templateToUpdate*)** est rejeté par l'eUICC, sans nécessairement que les autres éléments ***templateOT*** aussi constitutifs de l'élément ***templateToUpdate*** soient rejetés (si leur vérification par valeur de hachage est correcte). De même si une valeur de hachage ne fait pas partie des informations reçues pour un champ ***templateOT*** considéré, ce dernier sera rejeté par l'eUICC.

Dans l'exemple de la **Figure 3****,** l'étape E80 permet à l'eUICC de mettre à jour le *template* considéré (initialement dans la version V9.0) dans sa version V10.0.

Une fois la (ou les) mise à jour effectuée, l'eUICC envoie un acquittement (étape E90) au gestionnaire SM 330.

Au cours de l'étape E100, le gestionnaire SM 330 envoie le script d'installation du nouveau profil créé en E10 à partir du *template* en version V10.0.

En pratique, les éléments de profils envoyés sont chargés séquentiellement sur l'eUICC 20 (étapes E110), puis le profil est constitué en fusionnant, le cas échéant, des éléments de profils reçus avec le *template* V10.0 mis à jour en E80 (et tout autre *template* stocké dans l'eUICC, éventuelle mis à jour selon les enseignements de l'invention), et est installé (étape E120). Ces étapes de chargement du profil sont classiques.

Au cours d'une étape E130, l'eUICC 20 informe le gestionnaire SM 330 que l'installation du profil s'est bien passée.

Les exemples ci-dessus s'appuient, pour simplifier, sur un seul *template* (de version V10.0) utilisé lors de la création du profil à l'étape E10. L'invention ne se limite toutefois pas à un seul *template* et couvre les cas où plusieurs *templates* sont utilisés (et donc visés dans la requête d'audit et éventuellement mis à jour). Il est aisé pour l'homme du métier d'appliquer les enseignements ci-dessus au cas où plusieurs *templates* sont concernés. Les commandes décrites dans le présent document sont d'ailleurs prévues pour un ou plusieurs *templates* (un ou plusieurs OID).

Dans les exemples ci-dessus, le gestionnaire SM 330 envoie une requête d'audit en réaction à un événement déclencheur.

La présente invention vise également d'autres modes de réalisation, n'impliquant pas l'utilisation d'une requête d'audit.

Par exemple, l'eUICC 20 peut envoyer spontanément la réponse TEMPLATE AUDIT RESPONSE au gestionnaire SM 330, par exemple à intervalles réguliers. Pratiquement, l'eUICC 20 peut obtenir une référence temporelle de l'équipement hôte 10 sur laquelle baser la périodicité d'envoi d'une telle réponse. Par exemple, l'eUICC 20 peut convenir avec l'équipement hôte 10 d'un envoi périodique de commandes (par exemple commandes « status ») à la réception desquelles l'eUICC 20 incrémente un compteur de référence temporelle. C'est lorsque le compteur atteint la fin d'une nouvelle période préfixée, que l'eUICC spontanément construit la réponse TEMPLATE AUDIT RESPONSE avec des informations sur l'ensemble des *templates* qu'elle contient en mémoire.

Selon une autre variante, l'eUICC 20 envoie de façon spontanée une notification au gestionnaire SM 330, par l'intermédiaire d'une réponse TEMPLATE AUDIT RESPONSE, lors d'événements particuliers comme par exemple la mise à jour de l'OS (« *Operating System* ») de l'eUICC ou encore l'arrivée à échéance de certains *templates* (c'est-à-dire lorsque leur date d'expiration est atteinte ou dépassée).

La mise à jour de l'OS peut être commandée par le gestionnaire SM 330.

Dans ce mode particulier de mise à jour de l'OS, l'envoi de la réponse TEMPLATE AUDIT RESPONSE par l'eUICC est en réponse à une étape préalable de mise à jour, par le gestionnaire, du système d'exploitation de l'eUICC.

Dans un mode de réalisation, la réponse TEMPLATE AUDIT RESPONSE contient des informations sur chaque *template* que l'eUICC contient en mémoire, puisque le gestionnaire n'a pu indiquer à l'eUICC quels *templates* sont d'intérêt.

En variante, la réponse TEMPLATE AUDIT RESPONSE contient des informations sur les seuls *templates* que l'eUICC contient en mémoire et qui ont été mis à jour en même temps que le système d'exploitation.

Pour ce faire, l'eUICC 20 peut mémoriser, préalablement à la mise à jour de l'OS, les informations *metadata* (OID et/ou versions majeures et/ou versions mineures et/ou dates d'expirations et/ou valeur de hachage) des *templates* stockés en mémoire de l'eUICC. Puis, une fois la mise à jour de l'OS effectuée, une comparaison est effectuée, par l'eUICC, entre les informations *metadata* des *templates* alors stockés en mémoire de cette dernière et les informations *metadata* correspondantes telles que mémorisées avant la mise à jour de l'OS. Cette comparaison permet d'identifier facilement les *templates* qui ont été modifiés lors de la mise à jour de l'OS.

Dans un mode de réalisation particulier, l'événement relatif à la mise à jour de l'OS peut être combiné avec un autre événement pour déclencher l'envoi (spontané) de la réponse TEMPLATE AUDIT RESPONSE par l'eUICC. Par exemple cet autre événement peut comprendre une première connexion ou authentification réseau post mise à jour OS, ou bien un événement de type toolkit, ou bien encore tout autre type d'événement.

Aussi, selon une autre variante du premier mode de réalisation décrit ci-dessus, dans laquelle l'eUICC 20 dispose d'une version [V9.0] de *template* plus récente que le gestionnaire SM 330 [V8.0], la mise à jour E80 du *template* peut consister à installer une ancienne version du *template* sur l'eUICC (ici la V8.0). Ceci permet, lorsque le gestionnaire SM 330 a déjà calculé le nouveau profil à charger à partir de l'ancienne version du *template,* de ne pas recalculer le profil. Une mise à jour ultérieure du *template* dans le serveur et/ou dans l'eUICC pourrait ensuite être envisagée.

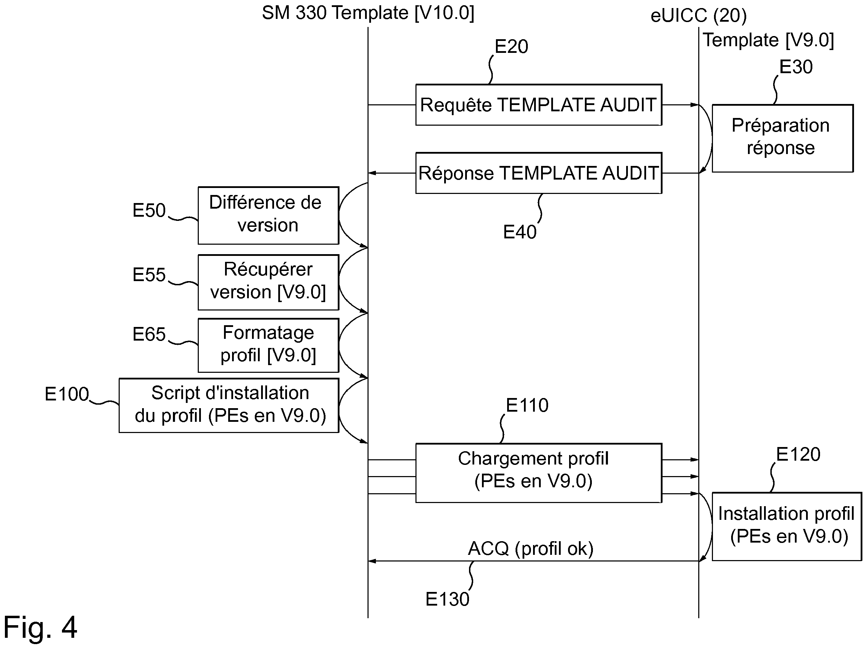

La **Figure 4** représente, sous forme de chronogramme, des étapes d'un procédé de gestion selon un deuxième mode de réalisation de l'invention. Ces étapes peuvent être mises en œuvre par les différents éléments représentés sur la **Figure 1****,** notamment le gestionnaire SM 330 et l'eUICC 20.

Dans cet exemple, les étapes similaires à celles de l'exemple de la **Figure 3** portent des références numériques identiques. Aussi, sauf mention contraire, il faudra se référer à la **Figure 3** en ce qui concerne la description de ces étapes. De même que précédemment, l'eUICC stocke un *template* d'élément de profil en version V9.0. Le gestionnaire SM 330 peut, quant à lui, soit ne stocker aucun *template* correspondant (i.e. ayant le même OID) soit stocker un *template* correspondant dans une autre version, par exemple V10.0.

Dans ce second mode de réalisation, le procédé comprend l'envoi d'une requête TEMPLATE AUDIT REQUEST par le gestionnaire SM 330 à l'eUICC 20 (étape E20), le traitement de la requête dans l'eUICC (étape E30) et la réception d'une réponse TEMPLATE AUDIT RESPONSE en provenance de l'eUICC 20, par le gestionnaire SM 330 (étape E40). Les explications fournies ci-dessus **(****Figure 3****)** en lien avec ces étapes s'appliquent également ici.

Par ailleurs, les variantes basées sur l'envoi spontané de la réponse TEMPLATE AUDIT RESPONSE par l'eUICC 20 (à intervalles réguliers, suite à une mise à jour de l'OS, éventuellement en combinaison avec un autre événement) peuvent également être envisagées.

Si le gestionnaire SM 330 dispose déjà en mémoire d'un *template* ayant le même OID que celui listé dans la réponse reçue, il peut comparer, à l'étape E50, les informations reçues avec les informations associées au *template* qu'il dispose déjà en mémoire. Cette étape permet de déterminer s'il existe une différence de version entre les deux *templates,* Bien entendu, l'étape E50 est réalisée pour l'ensemble des *templates* pour lesquels une information est retournée dans la réponse.

Cette étape est optionnelle en ce sens que le gestionnaire SM 330 peut ne pas disposer d'un tel *template* en mémoire ou peut en faire fi et réaliser l'étape E55 quand bien même un *template* correspondant est déjà en mémoire.

A noter que l'absence de *template* en mémoire correspond implicitement à la détection d'une différence de version entre le *template* stocké dans l'eUICC et celui (hypothétique) correspondant stocké dans le gestionnaire.

Au cours d'une étape E55 qui fait soit suite à la réception de la réponse d'audit (E40) soit suite à une différence de versions détectée à l'étape E50, le gestionnaire SM 330 traite les informations reçues afin d'identifier la version du *template* stocké dans l'eUICC 20, ici V9.0. Puis le gestionnaire SM 330 récupère cette même version de *template,* par exemple dans sa propre mémoire ou dans une base de données interne ou externe ou bien encore auprès d'un serveur, par exemple le serveur dédié du constructeur de l'eUICC identifié par la valeur du champ ***constructorID*** de la réponse. Il le stocke alors en mémoire, en remplacement de l'éventuel *template* (avec le même OID) qu'il avait déjà en mémoire.

Bien entendu, cette étape est réalisée pour l'ensemble des *templates* pour lesquels une information est retournée dans la réponse ou pour l'ensemble des *templates* pour lesquels une différence de version est déterminée à l'étape E50.

Au cours d'une étape E65, similaire à l'étape E10 décrite en lien avec la **Figure 3****,** le gestionnaire SM 330 peut alors créer un nouveau profil composé d'éléments de profil formatés à l'aide de *templates* ayant les mêmes caractéristiques (*metadata* et contenu) que ceux présents sur l'eUICC.

Dans notre exemple, le gestionnaire SM 330 génère un nouveau profil dont un élément de profil est créé par référence au *template* en version V9.0. De façon avantageuse, le profil ainsi formaté est adapté au(x) *template(s)* présent(s) sur l'eUICC 20.

Les étapes suivantes consistent en la transmission du profil à l'eUICC 20 via le gestionnaire SM 330 (étapes E100, E110) puis en son installation à l'aide des *templates* (le *template* V9.0 dans notre exemple) stockés dans l'eUICC 20 (étape E120). Le gestionnaire SM 330 est ensuite informé du bon déroulement de l'installation (étapes E130).

Dans ce second mode de réalisation, la mise à jour du *template* en cas de différence de version a lieu au niveau du gestionnaire 330 (par remplacement de l'ancien *template* ou par chargement du *template* si le gestionnaire n'en détenait pas déjà une autre version) et préalablement à l'étape de génération du nouveau profil. Elle permet de faire correspondre le *template* mis à jour avec la version détenue par l'eUICC (et donc telle qu'indiquée dans la dernière réponse reçue par le gestionnaire) lorsqu'il décide de créer le nouveau profil. Ainsi, le nouveau profil à charger sur l'eUICC est généré à partir du *template* mis à jour.

Les exemples qui précèdent ne sont que des modes de réalisation de l'invention qui ne s'y limite pas.

## Revendications

1. Procédé de chargement d'un profil en mémoire d'un élément sécurisé (20), comportant, au niveau d'un serveur distant (310, 320, 330) de l'élément sécurisé, les étapes suivantes :
recevoir (E40), de l'élément sécurisé, une information représentative d'une version d'un modèle d'élément de profil stocké en mémoire (220, 230) de l'élément sécurisé,
comparer l'information reçue avec des informations associées à un même modèle stocké en mémoire du serveur distant pour générer un nouveau profil, de sorte à déterminer (E50) une différence de version du modèle,
en cas de détermination d'une différence, envoyer (E70) à l'élément sécurisé une commande de mise à jour (E80) du modèle stocké en mémoire de l'élément sécurisé ou mettre à jour (E55) le modèle stocké par le serveur distant, pour aligner leurs versions,
générer (E10, E65) un profil incluant un élément de profil formaté à l'aide du modèle stocké par le serveur distant, dans sa version alignée, et
postérieurement à l'étape de mise à jour, envoyer (E100, E110), à l'élément sécurisé, le profil généré.

2. Procédé selon la revendication 1, comprenant en outre une étape d'envoi (E20) d'une requête comprenant une commande pour recevoir, en réponse (E40), ladite information.

3. Procédé selon la revendication 1, dans lequel l'étape (E40) de réception de ladite information est en réponse à une étape préalable de mise à jour, par le serveur distant, d'un système d'exploitation de l'élément sécurisé.

4. Procédé selon l'une quelconque des revendications 1 à 3, dans lequel ladite étape (E50) de détermination d'une différence comprend la détermination d'une différence entre l'information obtenue du modèle stocké en mémoire de l'élément sécurisé (20) et la version du modèle utilisé pour générer le profil à envoyer.

5. Procédé selon l'une quelconque des revendications 1 à 3, dans lequel, lors de l'étape de mise à jour (E55) le modèle stocké par le serveur distant (310, 320, 330) est rendu correspondant à la version du modèle obtenue de l'élément sécurisé, de sorte que le profil à envoyer est généré à l'aide du modèle mis à jour.

6. Procédé de chargement d'un profil en mémoire d'un élément sécurisé (20), comportant, au niveau de l'élément sécurisé, les étapes suivantes :
envoyer (E40), à un serveur distant (310, 320, 330), une information représentative d'une version d'un modèle d'élément de profil stocké en mémoire (220, 230) de l'élément sécurisé,
en réponse à cet envoi (E40), recevoir et exécuter (E80) une commande de mise à jour du modèle d'élément de profil stocké en mémoire, envoyée (E70) par le serveur distant,
postérieurement à l'étape de mise à jour (E80), recevoir (E110) un profil à charger envoyé par le serveur distant, le profil à charger incluant au moins un élément de profil formaté à l'aide du modèle stocké en mémoire, et
charger et installer (E120), en mémoire, le profil reçu par fusion avec le modèle stocké à l'aide duquel le profil est formaté.

7. Procédé selon la revendication 6, dans lequel l'étape (E40) d'envoi de ladite information par l'élément sécurisé est en réponse à la réception d'une requête émise (E20) par le serveur distant (310, 320, 330), comprenant une commande pour obtenir, en réponse, ladite information.

8. Procédé selon la revendication 6, dans lequel l'étape (E40) d'envoi de ladite information par l'élément sécurisé est en réponse à une étape préalable de réception d'une commande de mise à jour, envoyée par le serveur distant, du système d'exploitation de l'élément sécurisé et de mise à jour dudit système d'exploitation.

9. Procédé selon la revendication 8, dans lequel l'élément sécurisé (20) envoie une dite information représentative d'une version de modèle d'élément de profil pour chaque modèle stocké en mémoire (220, 230) de l'élément sécurisé ou uniquement pour chaque modèle stocké en mémoire (220, 230) de l'élément sécurisé qui a été modifié lors de la mise à jour préalable du système d'exploitation.

10. Procédé selon l'une quelconque des revendications 1 à 9, dans lequel l'information représentative d'une version du modèle d'élément de profil comprend l'un ou plusieurs parmi : un numéro de version dudit modèle, une date d'expiration dudit modèle et une valeur de hachage calculée à partir dudit modèle.

11. Support d'informations lisible par un microprocesseur, comprenant des instructions d'un programme d'ordinateur pour mettre en œuvre un procédé selon l'une quelconque des revendications 1 à 10 lorsqu'elles sont chargées et exécutées par le microprocesseur.

12. Gestionnaire (310, 320, 330) de profil pour la personnalisation d'un élément sécurisé (20) par chargement de profil, le gestionnaire comprenant au moins un microprocesseur (210) configuré pour :
recevoir, de l'élément sécurisé, une information représentative d'une version d'un modèle d'élément de profil stocké en mémoire (220, 230) de l'élément sécurisé (20),
comparer l'information reçue avec des informations associées à un même modèle stocké en mémoire du gestionnaire pour générer un nouveau profil, de sorte à déterminer une différence de version du modèle,
en cas de détermination d'une différence, envoyer à l'élément sécurisé une commande de mise à jour du modèle stocké en mémoire de l'élément sécurisé ou mettre à jour le modèle stocké par le gestionnaire, pour aligner leurs versions,
générer un profil incluant un élément de profil formaté à l'aide du modèle stocké par le gestionnaire, dans sa version alignée, et
postérieurement à l'étape de mise à jour, envoyer, à l'élément sécurisé, le profil généré.

13. Gestionnaire (310, 320, 330) de profil selon la revendication 12, dans lequel le microprocesseur (210) est en outre configuré pour envoyer une requête comprenant une commande pour recevoir, en réponse, ladite information ou envoyer une commande de mise à jour d'un système d'exploitation de l'élément sécurisé (20) pour recevoir, en réponse, ladite information.

14. Elément sécurisé personnalisable (20) comprenant au moins un microprocesseur (210) configuré pour :
envoyer, à un serveur distant (310, 320, 330), une information représentative d'une version d'un modèle d'élément de profil stocké en mémoire (220, 230) de l'élément sécurisé,
en réponse à cet envoi, recevoir et exécuter une commande de mise à jour du modèle d'élément de profil stocké en mémoire, envoyée par le serveur distant,
postérieurement à l'étape de mise à jour, recevoir un profil à charger envoyé par le serveur distant, le profil à charger incluant au moins un élément de profil formaté à l'aide du modèle stocké en mémoire, et
charger et installer, en mémoire, le profil reçu par fusion avec le modèle stocké à l'aide duquel le profil est formaté.

15. Elément sécurisé personnalisable (20) selon la revendication 14, dans lequel le microprocesseur (210) est en outre configuré pour générer et envoyer ladite information en réponse à la réception d'une requête émise par le serveur distant (310, 320, 330), comprenant une commande pour obtenir, en réponse, ladite information, ou en réponse à une étape préalable de mise à jour, par le serveur distant, du système d'exploitation de l'élément sécurisé.

## Patentansprüche

1. Verfahren zum Laden eines Profils in den Speicher eines gesicherten Elements (20), das auf der Ebene eines entfernten Servers (310, 320, 330) des gesicherten Elements die folgenden Schritte umfasst:
Empfangen (E40), von dem gesicherten Element, einer Information, die für eine Version eines Profilelementmodells repräsentativ ist, das im Speicher (220, 230) des gesicherten Elements gespeichert ist,
Vergleichen der empfangenen Information mit den Informationen, die mit einem selben Modell verknüpft sind, das im Speicher des entfernten Servers gespeichert ist, um ein neues Profil zu erzeugen, derart, dass ein Versionsunterschied des Modells bestimmt wird (E50),
im Fall der Bestimmung eines Unterschieds, Senden (E70), an das gesicherte Element, eines Befehls zur Aktualisierung (E80) des im Speicher des gesicherten Elements gespeicherten Modells, oder Aktualisieren (E55) des durch den entfernten Server gespeicherten Modells, um ihre Versionen anzugleichen,
Erzeugen (E10, E65) eines Profils, das ein Profilelement enthält, das mittels des durch den entfernten Server gespeicherten Modells formatiert ist, in seiner angeglichenen Version, und
nach dem Schritt des Aktualisierens, Senden (E100, E110) des erzeugten Profils an das gesicherte Element.

2. Verfahren nach Anspruch 1, das ferner einen Schritt des Sendens (E20) einer Anfrage umfasst, die einen Befehl zum Empfangen (E40) der Information als Antwort umfasst.

3. Verfahren nach Anspruch 1, wobei der Schritt (E40) des Empfangs der Information als Antwort auf einen vorhergehenden Schritt der Aktualisierung eines Betriebssystems des gesicherten Elements durch den entfernten Server erfolgt.

4. Verfahren nach einem der Ansprüche 1 bis 3, wobei der Schritt (E50) der Bestimmung eines Unterschieds die Bestimmung eines Unterschieds zwischen der erhaltenen Information des im Speicher des gesicherten Elements (20) gespeicherten Modells und der zum Erzeugen des zu sendenden Profils verwendeten Version des Modells umfasst.

5. Verfahren nach einem der Ansprüche 1 bis 3, wobei beim Schritt der Aktualisierung (E55) das durch den entfernten Server (310, 320, 330) gespeicherte Modell mit der von dem gesicherten Element erhaltenen Version des Modells in Entsprechung gebracht wird, derart, dass das zu sendende Profil mittels des aktualisierten Modells erzeugt wird.

6. Verfahren zum Laden eines Profils in den Speicher eines gesicherten Elements (20), das, auf der Ebene des gesicherten Elements, die folgenden Schritte umfasst:
Senden (E40), an einen entfernten Server (310, 320, 330), einer Information, die für eine Version eines im Speicher (220, 230) des gesicherten Elements gespeicherten Profilelementmodells repräsentativ ist,
als Antwort auf dieses Senden (E40), Empfangen und Ausführen (E80) eines Befehls zur Aktualisierung des im Speicher gespeicherten Profilelementmodells, der von dem entfernten Server gesendet (E70) wird,
nach dem Schritt der Aktualisierung (E80), Empfangen (E110) eines zu ladenden Profils, das durch den entfernten Server gesendet wird, wobei das zu ladende Profil mindestens ein mittels des im Speicher gespeicherten Modells formatiertes Profilelement ist, und
Laden und Installieren (E120) des empfangenen Profils durch Fusion mit dem gespeicherten Modell, mittels dessen das Profil formatiert ist, in den bzw. im Speicher.

7. Verfahren nach Anspruch 6, wobei der Schritt (E40) des Sendens der Information durch das gesicherte Element als Antwort auf den Empfang einer durch den entfernten Server (310, 320, 330) ausgegebenen (E20) Anfrage erfolgt, die einen Befehl zum Erhalten der Information als Antwort umfasst.

8. Verfahren nach Anspruch 6, wobei der Schritt (E40) des Sendens der Information durch das gesicherte Element als Antwort auf einen vorhergehenden Schritt des Empfangs eines durch den entfernten Server gesendeten Befehls zur Aktualisierung des Betriebssystems des gesicherten Elements und der Aktualisierung des Betriebssystems erfolgt.

9. Verfahren nach Anspruch 8, wobei das gesicherte Element (20) für jedes im Speicher (220, 230) des gesicherten Elements gespeicherte Modell oder lediglich für jedes im Speicher (220, 230) des gesicherten Elements gespeicherte Modell, das bei der vorhergehenden Aktualisierung des Betriebssystems geändert wurde, eine Information sendet, die für eine Version des Profilelementmodells repräsentativ ist.

10. Verfahren nach einem der Ansprüche 1 bis 9, wobei die Information, die für eine Version des Profilelementmodells repräsentativ ist, eines oder mehrere unter Folgendem umfasst: eine Versionsnummer des Modells, ein Verfalldatum des Modells und einen ausgehend von dem Modell berechneten Hash-Wert.

11. Informationsträger, der durch einen Mikroprozessor lesbar ist und Anweisungen eines Computerprogramms zum Einsatz eines Verfahrens nach einem der Ansprüche 1 bis 10 umfasst, wenn sie durch den Mikroprozessor geladen und ausgeführt werden.

12. Profilmanager (310, 320, 330) für die Personalisierung eines gesicherten Elements (20) durch Profilladen, wobei der Manager mindestens einen Mikroprozessor (210) umfasst, der für Folgendes konfiguriert ist:
Empfangen, von dem gesicherten Element, einer Information, die für eine Version eines Profilelementmodells repräsentativ ist, das im Speicher (220, 230) des gesicherten Elements (20) gespeichert ist,
Vergleichen der empfangenen Information mit Informationen, die mit einem selben Modell verknüpft sind, das im Speicher des Managers gespeichert ist, um ein neues Profil zu erzeugen, derart, dass ein Versionsunterschied des Modells bestimmt wird,
im Fall der Bestimmung eines Unterschieds, Senden, an das gesicherte Element, eines Befehls zur Aktualisierung des im Speicher des gesicherten Elements gespeicherten Modells, oder Aktualisieren des durch den Manager gespeicherten Modells, um ihre Versionen anzugleichen,
Erzeugen eines Profils, das ein Profilelement enthält, das mittels des durch den Manager gespeicherten Modells formatiert ist, in seiner angeglichenen Version, und
nach dem Schritt des Aktualisierens, Senden des erzeugten Profils an das gesicherte Element.

13. Profilmanager (310, 320, 330) nach Anspruch 12, wobei der Mikroprozessor (210) ferner konfiguriert ist, um eine Anfrage zu senden, die einen Befehl zum Empfangen der Information als Antwort umfasst, oder einen Befehl zur Aktualisierung eines Betriebssystems des gesicherten Elements (20) zum Empfangen der Information als Antwort zu senden.

14. Personalisierbares gesichertes Element (20), das mindestens einen Mikroprozessor (210) umfasst, der ausgestaltet ist zum:
Senden, an einen entfernten Server (310, 320, 330), einer Information, die für eine Version eines Profilelementmodells repräsentativ ist, das im Speicher (220, 230) des gesicherten Elements gespeichert ist,
als Antwort auf dieses Senden, Empfangen und Ausführen eines Befehls zur Aktualisierung des im Speicher gespeicherten Profilelementmodells, der von dem entfernten Server gesendet wird,
nach dem Schritt der Aktualisierung, Empfangen eines durch den entfernten Server gesendeten zu ladenden Profils, wobei das zu ladende Profil mindestens ein Profilelement enthält, das mittels des im Speicher gespeicherten Modells formatiert ist, und
Laden und Installieren des empfangenen Profils durch Fusion mit dem Modell, mittels dessen das Profil formatiert ist, im Speicher.

15. Personalisierbares Sicherheitselement (20) nach Anspruch 14, wobei der Mikroprozessor (210) ferner konfiguriert ist, um die Information als Antwort auf den Empfang einer von dem entfernten Server (310, 320, 330) ausgegebenen Anfrage, die einen Befehl zum Erhalten der Information als Antwort umfasst, oder als Antwort auf einen vorhergehenden Schritt der Aktualisierung des Betriebssystems des gesicherten Elements durch den entfernten Server zu erzeugen und zu senden.

## Claims

1. Method for loading a profile into a memory of a secure element (20), comprising, in a server (310, 320, 330) remote from the secure element, the following steps:
receiving (E40), from the secure element, a piece of information representative of a version of a profile-element template stored in the memory (220, 230) of the secure element,
comparing the received piece of information with pieces of information associated with the same template stored in the memory of the remote server in order to generate a new profile, so as to determine (E50) a difference in version of the template,
in case of determination of a difference, transmitting (E70) to the secured element a command to update (E80) the template stored in the memory of the secure element or updating (E55) the template stored by the remote server, in order to align their versions,
generating (E10, E65) a profile including a profile element formatted using the template stored by the remote server, in its aligned version, and
subsequently to the updating step, transmitting (E100, E110), to the secure element, the generated profile.

2. Method according to Claim 1, furthermore comprising a step of transmitting (E20) a request comprising a command in order to obtain, in response (E40), said piece of information.

3. Method according to Claim 1, wherein the step (E40) of receiving said piece of information is in response to a prior step in which an operating system of the secure element is updated by the remote server.

4. Method according to any one of Claims 1 to 3, wherein said step (E50) of determining a difference comprises determining a difference between the obtained piece of information of the template stored in the memory of the secure element (20) and the version of the template used to generate the profile to be sent.

5. Method according to any one of Claims 1 to 3, wherein during the updating step (E55) the template stored by the remote server (310, 320, 330) is made to correspond to the obtained version of the template of the secure element, so that the profile to be sent is generated using the updated template.

6. Method for loading a profile into a memory of a secure element (20), comprising, in the secure element, the following steps:
transmitting (E40), to a remote server (310, 320, 330), a piece of information representative of a version of a profile-element template stored in the memory (220, 230) of the secure element,
in response to this transmission (E40), receiving and executing (E80) a command to update the profile-element template stored in memory, said command being transmitted (E70) by the remote server,
subsequent to the updating step (E80), receiving (E110) a profile to be loaded, said profile being transmitted by the remote server, the profile to be loaded including at least one profile element formatted using the template stored in memory, and
loading and installing (E120), into memory, the received profile by merging it with the stored template based on which the profile is formatted.

7. Method according to Claim 6, wherein the step (E40) in which said piece of information is transmitted by the secure element is in response to the reception of a request sent (E20) by the remote server (310, 320, 330), comprising a command to obtain, in response, said piece of information.

8. Method according to Claim 6, wherein the step (E40) in which said piece of information is transmitted by the secure element is in response to a prior step, in which a command, transmitted by the remote server, to update the operating system of the secure element is received and in which said operating system is updated.

9. Method according to Claim 8, wherein the secure element (20) transmits a said piece of information representative of a version of a profile-element template for each template stored in the memory (220, 230) of the secure element or solely for each template stored in the memory (220, 230) of the secure element that was modified during the prior update of the operating system.

10. Method according to any one of Claims 1 to 9, wherein the piece of information representative of a version of the profile-element template comprises one or more among: a version number of said template, an expiry date of said template and a hash value calculated from said template.

11. Data medium readable by a microprocessor, comprising instructions of a computer program for implementing a method according to any one of Claims 1 to 10 when they are loaded and executed by the microprocessor.

12. Profile manager (310, 320, 330) for the personalization of a secure element (20) by profile loading, the manager comprising at least one microprocessor (210) configured to:
receive, from the secure element, a piece of information representative of a version of a profile-element template stored in a memory (220, 230) of the secure element (20),
compare the received piece of information with pieces of information associated with the same template stored in the memory of the manager in order to generate a new profile, so as to determine a difference in version of the template,
in case of determination of a difference, transmit a command to update the template stored in the memory of the secure element to the secure element or update the template stored by the manager, in order to align their versions,
generate a profile including a profile element formatted using the template stored by the manager, in its aligned version, and
subsequently to the updating step, transmit, to the secure element, the generated profile.

13. Profile manager (310, 320, 330) according to Claim 12, wherein the microprocessor (210) is furthermore configured to transmit a request comprising a command to receive, in response, said piece of information, or to transmit a command to update an operating system of the secure element (20) in order to receive, in response, said piece of information.

14. Personalizable secure element (20) comprising at least one microprocessor (210) configured to:
transmit, to a remote server (310, 320, 330), a piece of information representative of a version of a profile-element template stored in a memory (220, 230) of the secure element,
in response to this transmission, receive and execute a command to update the profile-element template stored in memory, said command being transmitted by the remote server,
subsequently to the updating step, receive a profile to be loaded, which is transmitted by the remote server, the profile to be loaded including at least one profile element formatted using the template stored in memory, and
loading and installing, into memory, the received profile by merging it with the stored template based on which the profile is formatted.

15. Personalizable secure element (20) according to Claim 14, wherein the microprocessor (210) is furthermore configured to generate and transmit said piece of information in response to the reception of a request sent by the remote server (310, 320, 330), comprising a command to obtain, in response, said piece of information, or in response to a prior step in which the operating system of the secure element is updated by the remote server.
